# EUROPEAN PATENT SPECIFICATION

(11) **EP 4 074 589 B1**
(45) Date of publication and mention of the grant of the patent: **06.11.2024**
(21) Application number: 22167869.1
(22) Date of filing: 12.04.2022
(51) Int. Cl.: B62M 6/65, B62M 11/10, B62M 17/00

(54) **DRIVE UNIT AND BICYCLE WITH DRIVE UNIT**
ANTRIEBSEINHEIT UND FAHRRAD MIT ANTRIEBSEINHEIT
UNITÉ D'ENTRAÎNEMENT ET BICYCLETTE DOTÉE DE L'UNITÉ D'ENTRAÎNEMENT

(30) Priority: 15.04.2021 JP 2021069057
(43) Date of publication of application: 19.10.2022
(73) Proprietor: Yamaha Hatsudoki Kabushiki Kaisha, Iwata-shi, Shizuoka 438-8501 (JP)
(72) Inventor: Fujishiro, Masaya, Shizuoka, 438-8501 (JP); Naito, Shinya, Shizuoka, 438-8501 (JP); Terada, Junji, Shizuoka, 438-8501 (JP); Kanno, Nobuyuki, Shizuoka, 438-0801 (JP)
(74) Representative: Grünecker Patent- und Rechtsanwälte PartG mbB

(56) References cited:
- CN-A- 104 859 782
- JP-B1- 6 633 148

## Description

The invention relates to a drive unit for a bicycle according to the preamble of independent claim 1 and a bicycle having a drive unit. Such a drive unit can be taken from the prior art document CN 104 859 782 A, which shows all the features of the preamble of independent claim 1.

JP 6633148 B discloses a bicycle which has a crank with pedals and an electric motor, and enables driving with human power and driving with the electric motor. The electric motor is arranged inside a rear-wheel hub. A rotor of the drive motor and the rear-wheel hub are fixed to each other so as to rotate integrally. Further, the bicycle has a first transmission shaft arranged on the rotational center of the rear wheel, and a second transmission shaft arranged along a rear arm. The power of the crank is transmitted to the rear-wheel hub via the transmission shafts.

It is an object of the present invention to provide a drive unit in which an electric motor is arranged in the rear wheel, wherein detachment of the rear wheel from the rear arm can be achieved with a simple operation for, for example, an inspection of the electric motor. According to the present invention said object is solved by a drive unit having the features of independent claim 1. Preferred embodiments are laid down in the dependent claims.

### BRIEF DESCRIPTION OF THE DRAWINGS

FIG. 1 is a left side view showing an example of a bicycle proposed in the present disclosure.
FIG. 2A is a left side view of a drive unit provided to the bicycle shown in FIG. 1.
FIG. 2B is a plan view of the drive unit shown in FIG. 2A.
FIG. 2C is a right side view of the drive unit shown in FIG. 2A.
FIG. 3A is a cross-sectional view in IIIa-IIIa shown in FIG. 2A.
FIG. 3B is an enlarged view of a rear portion of the drive unit shown in FIG. 3A.
FIG. 4 is a cross-sectional view in IV-IV shown in FIG. 2A.
FIG. 5 is a cross-sectional view in V-V shown in FIG. 2A.
FIG. 6A is a cross-sectional view in Vla-Vla shown in FIG. 2B.
FIG. 6B is a cross-sectional view in Vlb-Vlb shown in FIG. 6A.
FIG. 7A is a cross-sectional view showing a modified example of a shaft case shown in FIG. 6A, and is substantially the same in cutting plane as FIG. 6A.
FIG. 7B is a cross-sectional view in Vllb-Vllb shown in FIG. 7A.
FIG. 8A is a left side view of a rear wheel with a rear arm detached.
FIG. 8B is a perspective view of a rear-wheel hub, a coupling member, and a terminal block shown in FIG. 8A.
FIG. 9A is a cross-sectional view of a rear portion of the rear arm with the rear-wheel hub detached, and is the same in cutting plane as FIG. 3B.
FIG. 9B is a perspective view of the rear portion of the rear arm shown in FIG. 9A.
FIG. 10 is a cross-sectional view showing a modified example of the rear-wheel hub and a support. FIG. 10 is the same in cutting plane as FIG. 3B.
FIG. 11 is a cross-sectional view showing a modified example of an arrangement of a transmission shaft and a torque sensor, and is the same in cutting plane as FIG. 3B.
FIG. 12 is a cross-sectional view showing a modified example of an arrangement of the torque sensor, and is the same in cutting plane as FIG. 3A.
FIG. 13A is a left side view showing a modified example of the drive unit in which a drum brake system is adopted as a brake system.
FIG. 13B is a cross-sectional view represented by a line Xlllb-Xlllb shown in FIG. 13A.

### DETAILED DESCRIPTION OF THE PREFERRED EMBODIMENTS

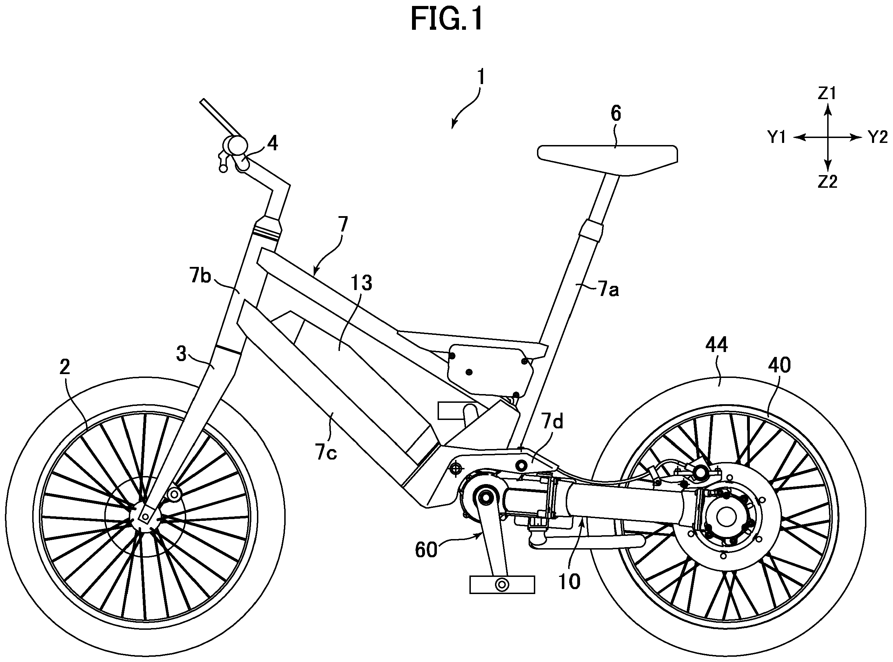

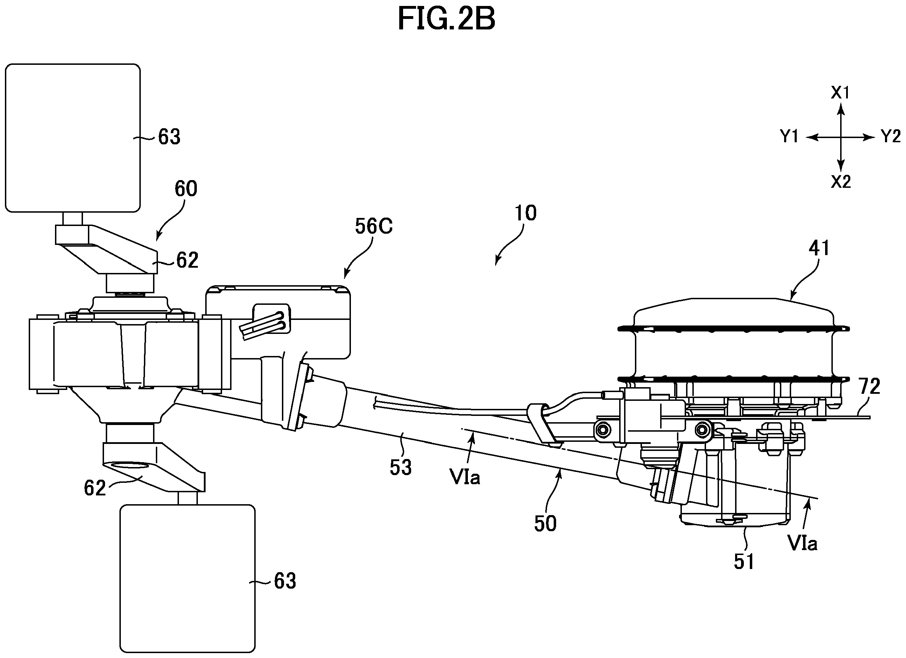

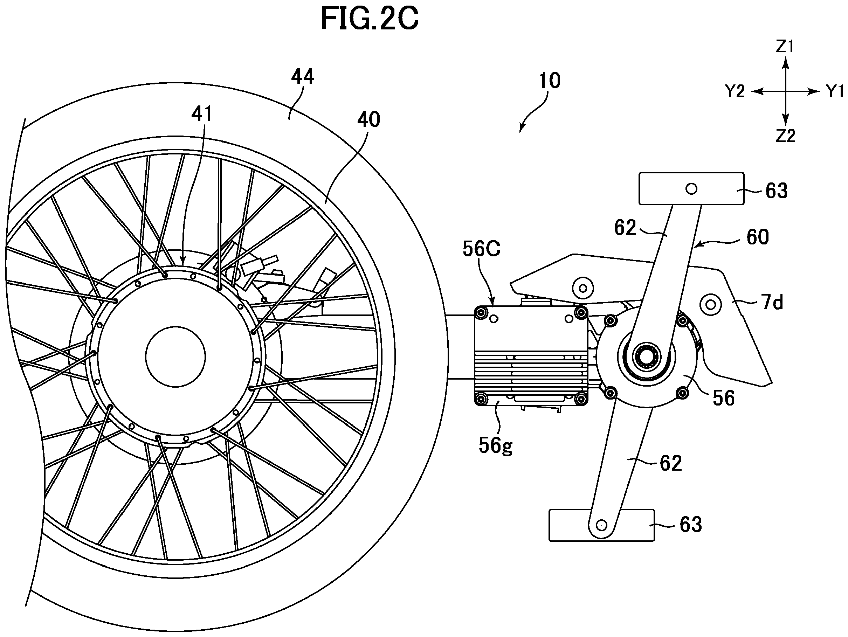

In the present specification, as an example, a bicycle 1 and a drive unit 10 shown in FIG. 1 and so on will be described. In FIG. 1, directions indicated by Y1 and Y2 are referred to as a front side and a rear side, respectively, and directions indicated by Z1 and Z2 are referred to as an upper side and a lower side, respectively. Directions indicated by X1 and X2 shown in FIG. 2B are referred to as a right side and a left side, respectively. Further, a direction of X1-X2 is referred to as a horizontal direction, or a "direction along a rotational center line Ax1."

It should be noted that in the specification, there is described an example in which a rear arm 50 described later is arranged at the left side of a rear wheel 40. However, it is possible for the rear arm 50 to be arranged at the right side of the rear wheel 40. In a structure in which the rear arm 50 is arranged at the right side of the rear wheel 40, a structure described hereinafter may be opposite with respect to relative positions of components and members in the horizontal direction.

### [Overall Vehicle]

As shown in FIG. 1, the bicycle 1 has a front fork 3, a front wheel 2 supported by a lower end of the front fork 3, and a steering bar 4 coupled to the front fork 3 via a steering shaft. The bicycle 1 has a saddle 6. The saddle 6 is supported by an upper end of a saddle post 7a.

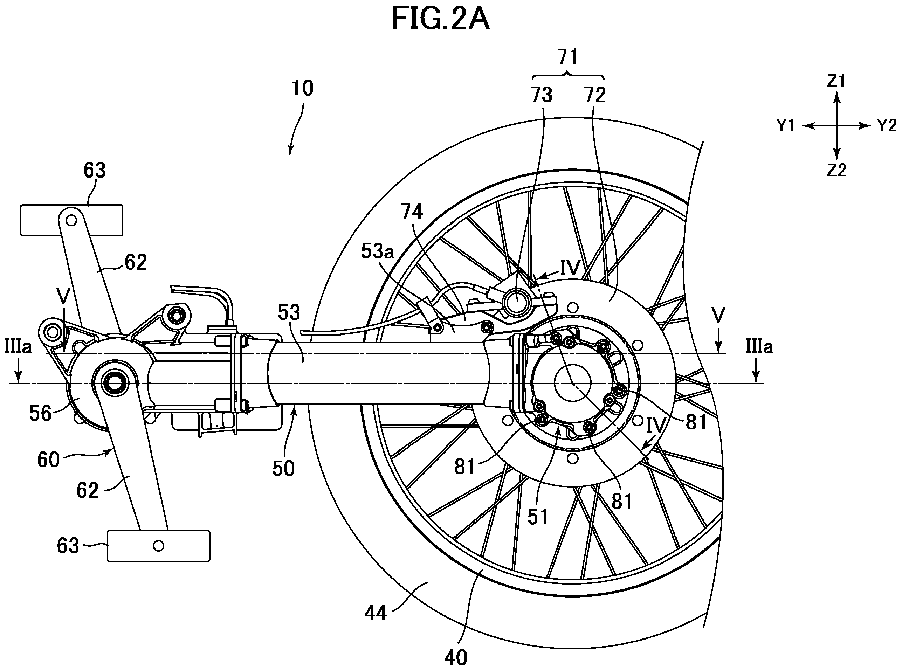

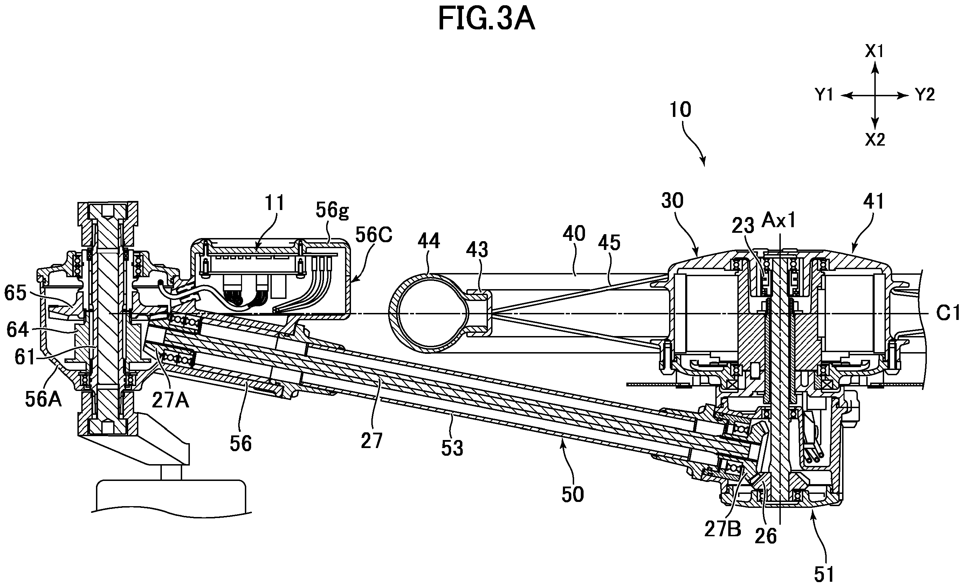

It is possible to arrange a crank 60 at the lower side of the saddle post 7a. The crank 60 has a crank shaft 61 (see FIG. 3A), crank arms 62 (see FIG. 2A) attached to both end portions of the crank shaft 61, and pedals 63 (see FIG. 2A) respectively attached to the crank arms 62.

As shown in FIG. 1, a body frame 7 may include a head pipe 7b which supports the saddle post 7a and the steering shaft, and a down frame 7c extending obliquely downward from the head pipe 7b. It is possible to fix a bracket 7d to a lower end of the saddle post 7a and a lower end of the down frame 7c. The drive unit 10 of the bicycle 1 may include a front case 56 (see FIG. 2A) which is located at the forefront of the rear arm 50 described later to hold the crank 60. The front case 56 may be attached to the bracket 7d. The bicycle 1 has a battery 13 (see FIG. 1) for storing electric power to be supplied to an electric motor 30 described later. The battery 13 may be attached to, for example, the down frame 7c. The structure of the body frame 7, the support structure of the front case 56, an arrangement of the battery 13, and so on are not limited to the example described here.

### [Three Drive Modes]

An accelerator grip may be disposed in a right portion of the steering bar 4. The accelerator grip may include an accelerator sensor for detecting an operation amount (a rotational position) of the accelerator grip. The bicycle 1 has a rear wheel 40 and the electric motor 30 (see FIG. 3A) provided to the rear wheel 40. An output signal of the accelerator sensor may be input to a motor control device 11 (see FIG. 3A). The motor control device 11 may generate a command value corresponding to the operation amount of the accelerator grip. Further, the motor control device 11 may supply the electric power corresponding to the command value to the electric motor 30. The motor control device 11 includes an inverter to convert a direct current obtained from the battery 13 into, for example, an alternating current with a frequency corresponding to the command value, and then supply the alternating current to the electric motor 30. On this occasion, the bicycle 1 may be driven only with the power obtained from the electric motor 30.

The power (rotational force) of the crank 60 is transmitted to the rear wheel 40 via a power transmission mechanism described later. The crank shaft 61 may include a torque sensor 64 (see FIG. 3A) for detecting a force (a tread force) applied to the pedal 63 by the user. The torque sensor 64 may include a transmission member arranged in an inner circumferential portion of the torque sensor 64, and a detection section including a detecting coil and a magnetic circuit. A part (e.g., a left portion) of the transmission member may be serration-fitted to an outer circumference of the crank shaft 61, and another part (e.g., a right portion) of the transmission member may be serration-fitted to a gear 65. The transmission member may rotate integrally with the crank shaft 61, and the rotation of the crank shaft 61 may be transmitted to the gear 65 via the transmission member. The detecting coil of the torque sensor 64 may output a signal corresponding to, for example, a twist of the transmission member. The torque sensor 64 may be, for example, a magnetostrictive sensor. An output signal of the torque sensor 64 may be input to the motor control device 11. The motor control device 11 generates a command value corresponding to the tread force. The motor control device 11 supplies the electric motor 30 with the electric power corresponding to the command value, and the electric motor 30 is driven by the electric power. Due to this drive of the electric motor 30, pedaling with the pedals 63 by the user is aided. Further, in the state in which the electric motor 30 is not driven, it is possible to drive the rear wheel 40 only with the power transmitted from the crank shaft 61 via the power transmission mechanism.

In other words, it is possible for the bicycle 1 to make the drive in the following three modes possible:
(i) a drive only with the power of the electric motor 30 (a motor-driven mode);
(ii) a drive with the power of the electric motor 30 and the tread force applied to the pedals 63 (an assist mode); and
(iii) a drive only with the tread force applied to the pedals 63 (a human power mode).
The bicycle 1 may include a switch for the user to switch between such three modes.

It should be noted that the structure proposed in the present disclosure can be applied not only to the bicycle in which the three modes can be selected as described above, but also to, for example, a bicycle in which only (ii) the assist mode and (iii) the human power mode may be selected. In this case, the bicycle is not required to have the accelerator grip and the accelerator sensor.

### [Drive Unit]

The structure of the drive unit 10 will hereinafter be described. The drive unit 10 has two power systems. As illustrated in FIG. 3A, a first power system includes the electric motor 30, and transmits the rotation of a rotor 32 provided to the electric motor 30 to a hub 41 of the rear wheel 40. A second power system includes the crank shaft 61 with the pedals 63, and transmits the rotation (power) of the crank shaft 61 to the hub 41 of the rear wheel 40 (the hub 41 is hereinafter referred to as a rear-wheel hub).

### [First Power System]

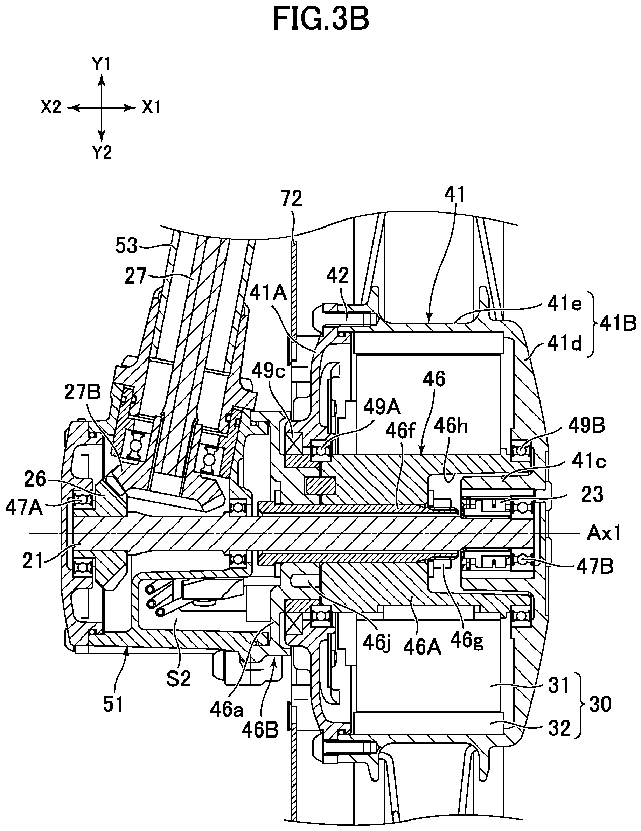

As shown in FIG. 3B, the electric motor 30 has a stator 31 and the rotor 32. The stator 31 has a plurality of iron cores arranged circularly centering on the rotational center line Ax1 of the rear wheel 40, and coils respectively wound around the iron cores. The rotor 32 has a plurality of magnets arranged circularly centering on the rotational center line Ax1 of the rear wheel 40. In the drive unit 10, it is possible for the rotor 32 to be located outside in a radial direction with respect to the stator 31, and to be opposed to the stator 31 in the redial direction. In other words, the electric motor 30 may be a radial-gap type electric motor. Unlike the drive unit 10, it is possible for the electric motor 30 to be an axial-gap type electric motor. In other words, the rotor 32 and the stator 31 may be opposed to each other in the axial direction (a direction of the rotational center line Ax1). The electric motor 30 may be a transverse magnetic flux type motor which forms a magnetic path perpendicular to the rotational direction. In the motor of this kind, the stator may include an armature core and a coil, and the rotor may include a field core and a magnet. A magnetic flux perpendicular to the rotational direction may be formed in at least one of the armature core and the field core.

As shown in FIG. 3A, the rear wheel 40 has a rim 43 that has a tire 44 attached thereon, and the rear-wheel hub 41. Further, the rear wheel 40 has spokes 45 which extend in the radial direction from the hub 41 to support the rim 43. The rotor 32 may be fixed to an inner surface of the rear-wheel hub 41. Further, the rotor 32 and the rear-wheel hub 41 may rotate integrally with each other. In the structure in which no reduction gear intervenes between the rear-wheel hub 41 and the electric motor 30 as described above, there is no loss due to the reduction gear, and thus, it is possible to efficiently drive the rear wheel 40.

### [Second Power System]

As shown in FIG. 3A, on the crank shaft 61, there may be arranged the gear 65 (a bevel gear in the example of the bicycle 1) which rotates integrally with the crank shaft 61, and the torque sensor 64 described above. A power transmission path (the second power system) for transmitting the power (rotation) of the crank shaft 61 to the rear-wheel hub 41 may be provided to a transmission shaft 21. The transmission shaft 21 is separated rearward from the crank shaft 61, and may be located on the rotational center line Ax1 of the rear wheel 40. As described later in detail, the rear arm 50 may include a rear case 51 in a rear portion of the rear arm 50. It is possible for the transmission shaft 21 to be supported by the rear case 51 so as to be able to rotate.

The second power system may include a power transmission mechanism for transmitting the power (rotation) of the crank shaft 61 to the transmission shaft 21. The power transmission mechanism may be a shaft drive mechanism. In other words, as shown in FIG. 3A, the power transmission mechanism may include the gear 65 (specifically the bevel gear) disposed on the crank shaft 61, a gear 26 (specifically a bevel gear) provided to the transmission shaft 21, and a drive shaft 27 arranged along a front-back direction of a vehicle body in a side view of the vehicle body. The drive shaft 27 may have a gear 27A (specifically a bevel gear) engaged with the gear 65 on the crank shaft 61 at the front end of the drive shaft 27. Further, the drive shaft 27 may have a gear 27B (specifically a bevel gear) engaged with the gear 26 on the transmission shaft 21 at the rear end of the drive shaft 27.

Unlike the example described here, the drive unit 10 may have a chain drive mechanism, a belt drive mechanism, or the like as the power transmission mechanism. In other words, the drive unit 10 may have a chain or a belt instead of the drive shaft 27.

A one-way clutch may be arranged in the power transmission path between the crank shaft 61 and the rear-wheel hub 41. In the drive unit 10, as shown in FIG. 3A, a one-way clutch 23 may be arranged between the transmission shaft 21 and the rear-wheel hub 41. The one-way clutch 23 transmits the rotational force of the transmission shaft 21 to the rear-wheel hub 41 on the one hand, but does not transmit the rotational force of the rear-wheel hub 41 to the transmission shaft 21 on the other hand.

### [Arrangement of Rear Arm and Drive Shaft]

The rear arm 50 is arranged in only one of the right side and the left side with respect to the rear wheel hub 41, but is not arranged in the other thereof. As shown in FIG. 3A, in the drive unit 10, the rear arm 50 is arranged at the left side of the rear-wheel hub 41, but is not arranged at the right side thereof. Therefore, a worker of the maintenance can easily perform detachment of the rear-wheel hub 41 from the rear arm 50 toward the right side. Contrary to the example shown in FIG. 3A, it is possible for the rear arm 50 to be arranged only at the right side of the rear-wheel hub 41.

The power transmission mechanism for transmitting the rotation of the crank shaft 61 to the transmission shaft 21 may be arranged at the left side of the rear wheel 40 together with the rear arm 50. As shown in FIG. 3A, in the drive unit 10, the drive shaft 27 is arranged at the left side of the rear wheel 40. The drive shaft 27 may be coupled to the left portion of the transmission shaft 21. The transmission shaft 21 may extend rightward from the rear portion of the rear arm 50 to be arranged inside the stator 31 in the radial direction. Further, the transmission shaft 21 may be coupled to the rear-wheel hub 41 at an opposite side to (i.e., the right side of) the drive shaft 27 and the rear arm 50 across the center C1 of the rear wheel 40 in the horizontal direction. Due to this structure, it is possible to realize both of the support of the rear-wheel hub 41 by the rear arm 50 arranged only at the left side, and the power transmission from the crank shaft 61 to the rear-wheel hub 41.

As shown in FIG. 3A, the drive unit 10 may have the front case 56 which holds the crank 60 in the front portion of the drive unit 10. The rear arm 50 may have a shaft case 53 which has a cylindrical shape and extends rearward from the front case 56, and the rear case 51 located in the rear portion of the rear arm 50. The drive shaft 27 may be housed in the shaft case 53, and may be held by a bearing disposed inside the shaft case 53 so as to be rotatable. As described above, the bicycle 1 may have a chain drive mechanism or a belt drive mechanism as the power transmission mechanism. In this case, the rear arm 50 may have a case for housing the chain or a case for housing the belt instead of the shaft case 53. To the rear case 51, there may be attached a support 46 (see FIG. 3B) which supports the rear-wheel hub 41.

As shown in FIG. 3A, in the front case 56, there may be housed the gear 65 and the torque sensor 64 arranged on the crank shaft 61. Both end portions of the crank shaft 61 protrude in the axial direction from the front case 56. The crank arms 62 are respectively coupled to the both end portions of the crank shaft 61. The front case 56 may be attached to the bracket 7d (see FIG. 1) disposed in the lowermost portion of the body frame 7. The bracket 7d may be, for example, shaped like a box opening downward. The front case 56 may be arranged inside the bracket 7d, and attached to the bracket 7d.

The rear case 51 may be connected to a rear end of the shaft case 53 (see FIG. 3A). The rear case 51 may have a connection opening which opens toward the front side. The rear end of the shaft case 53 may be fitted to the connection opening of the rear case 51, and may be connected to the rear case 51 with a fixation tool such as a screw. The rear case 51 may house the gears 27B, 26. The coupling structure of the rear case 51 and the shaft case 53 is not limited to the example of the bicycle 1, and may arbitrarily be modified.

As shown in FIG. 3A, the position of the rear case 51 is distant leftward from the center C1 (the center in the horizontal direction of the vehicle body) in the horizontal direction of the rear wheel 40. The shaft case 53 may extend obliquely frontward from the rear case 51 toward the center C1. The front end of the shaft case 53 may be located at the front side of the rear wheel 40 and the electric motor 30. In other words, the front end of the shaft case 53 may overlap the rear wheel 40 and the electric motor 30 in a front view of the vehicle.

### [Rear-Wheel Hub]

As shown in FIG. 3B, the rear-wheel hub 41 may have a right member 41B and a left wall 41A. The right member 41B may have a right wall 41d which covers a right side surface of the electric motor 30, and a cylindrical part 41e which extends leftward from the right wall 41d to cover an outer circumference of the stator 31. To an inner surface of the cylindrical part 41e, there may be fixed the rotor 32. The rear arm 50 is arranged only at the left side of the rear wheel 40. Therefore, the right member 41B of the rear-wheel hub 41 is not required to be provided with an opening through which the transmission shaft 21 and the support 46 described later pass. The right member 41B opens leftward. The left wall 41A may cover a left side surface of the electric motor 30, and may be fixed to an outer circumferential edge of the cylindrical part 41e. The left wall 41A may be fixed to the cylindrical part 41e with a plurality of fixation tools (screws 42 or bolts) arranged in a circumferential direction.

The structure of the rear-wheel hub 41 is not limited to the example of the bicycle 1. For example, the rear-wheel hub 41 may be constituted by three members. For example, the left wall 41A, the right wall 41d, and the cylindrical part 41e may individually be formed, and may be fixed to each other with a fixation tool such as a bolt or a screw.

As shown in FIG. 3B, the transmission shaft 21 may be coupled to the right member 41B via the one-way clutch 23. On an inner surface of the right wall 41d of the right member 41B, there may be formed a holding cylindrical part 41c. The holding cylindrical part 41c may protrude leftward. The holding cylindrical part 41c may be located inside an end portion of the support 46 described later. The rightmost portion of the transmission shaft 21 may be located inside the holding cylindrical part 41c. Further, between the inner circumferential surface of the holding cylindrical part 41c and the outer circumferential surface of the transmission shaft 21, there may be arranged the one-way clutch 23. As described above, the position of the one-way clutch 23 is downstream of the drive shaft 27 in the power transmission path from the crank shaft 61 up to the rear-wheel hub 41. Therefore, when, for example, the bicycle runs only with the power of the electric motor 30, no rotation of the drive shaft 27 occurs. As a result, it is possible to prevent the power of the electric motor 30 from being wasted by the rotation of the drive shaft 27.

### [Arrangement of Brake]

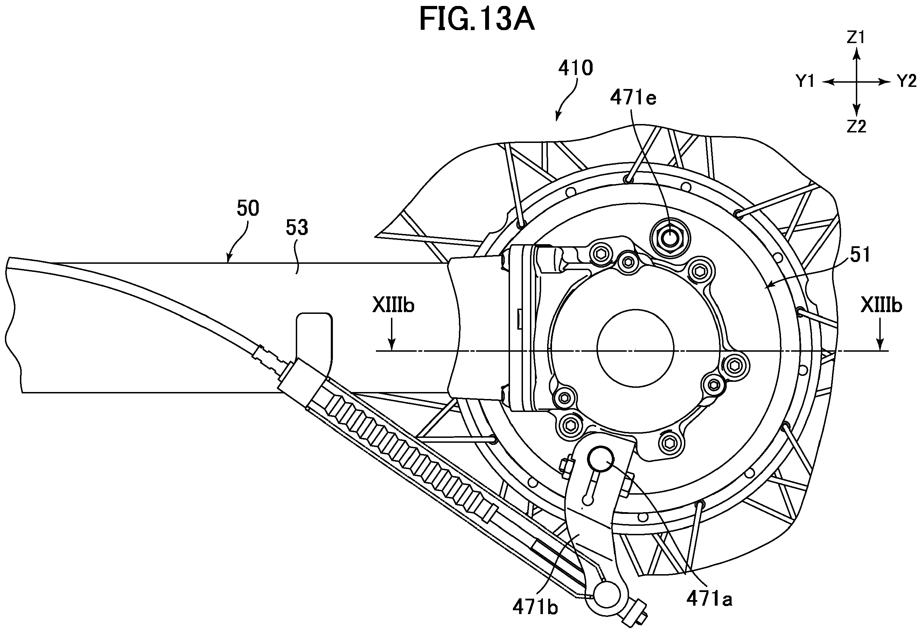

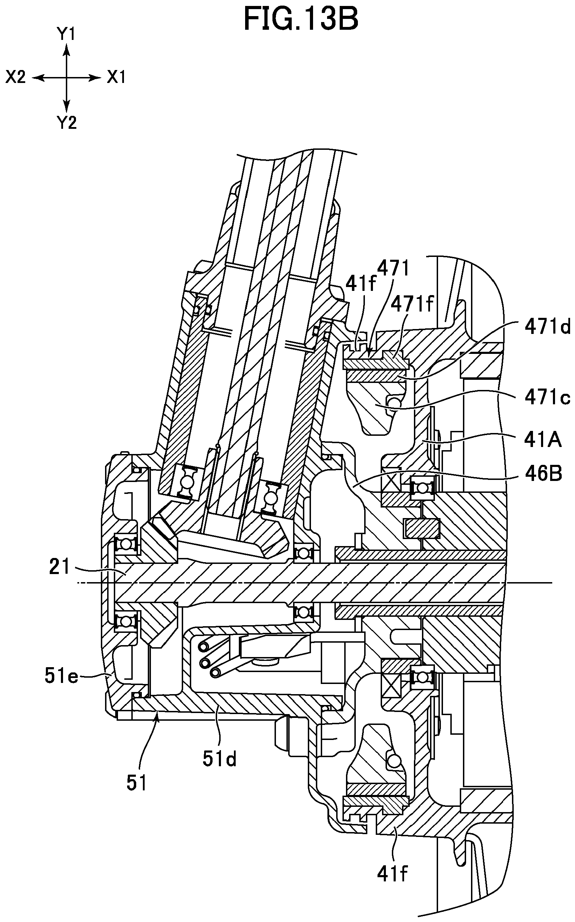

The drive unit 10 has a brake system 71 for the rear wheel 40. The brake system 71 is, for example, a disc brake system, and has a brake disc 72 rotating integrally with the rear-wheel hub 41, and a caliper 73 as shown in FIG. 2A. As shown in FIG. 3B, the brake disc 72 may be attached to, for example, the left wall 41A. The caliper 73 may be supported by the rear arm 50. Specifically, the rear arm 50 may have a caliper holding member 74 (see FIG. 2A) attached thereon. The caliper holding member 74 may be supported by the shaft case 53 via, for example, a bracket 53a (see FIG. 2A). A structure of the brake system 71 is not limited to the example of the drive unit 10. For example, the brake system 71 may be a drum brake system (see FIG. 13A and FIG. 13B).

### [Support for Rear-Wheel Hub]

As shown in FIG. 3B, the drive unit 10 may have the support 46 for supporting the rear-wheel hub 41 so as to allow the rear-wheel hub 41 to rotate. At the center of the support 46, there may be formed a through hole penetrating the support 46 along the rotational center line Ax1 of the rear wheel 40, and the transmission shaft 21 may be arranged in the through hole. Bearings 49A, 49B may be fitted on the outer circumference of the support 46, and the support 46 may support the rear-wheel hub 41 through the bearings 49A, 49B. The bearing 49A at the left side may be arranged between an inner edge of the left wall 41A of the rear-wheel hub 41 and the support 46. The bearing 49B at the right side may be arranged between the right wall 41d of the rear-wheel hub 41 and an outer circumferential surface of an end portion of the support 46.

As shown in FIG. 3B, the support 46 may have a stator holding member 46A arranged inside the stator 31. The stator 31 may be fixed to an outer circumferential surface of the stator holding member 46A. For example, the iron cores constituting the stator 31 may be press-fitted or bonded to the outer circumferential surface of the stator holding member 46A.

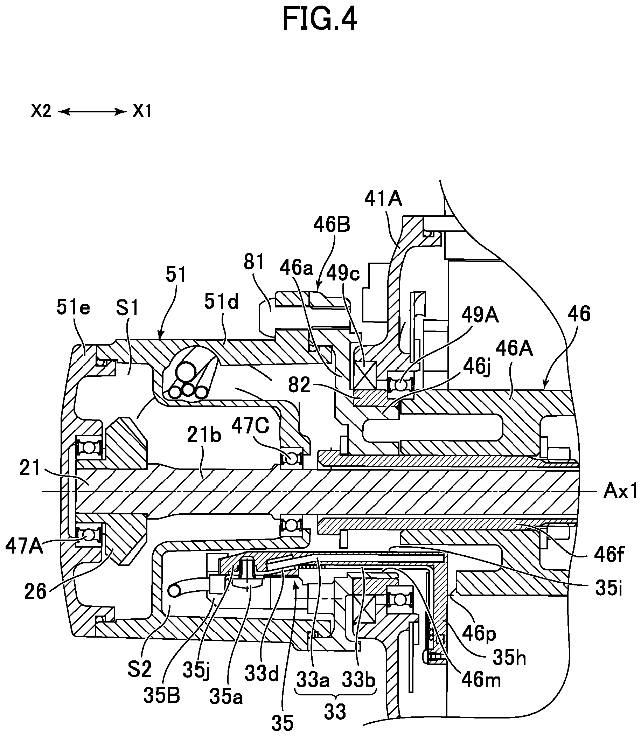

As shown in FIG. 3B, the support 46 may further have a coupling member 46B. The coupling member 46B may have a wall part 46a located at an outer side of the rear-wheel hub 41 in a direction along the rotational center line Ax1 of the rear-wheel hub 41. In the drive unit 10, the wall part 46a may be located at the left side of the left wall 41A of the rear-wheel hub 41. The rear case 51 of the rear arm 50 may be attached to the outer circumferential portion of the wall part 46a (see FIG. 4) with a plurality of fixation tools. At the outer side of the rear case 51, there may be formed a plurality of attachment holes arranged side by side along the outer circumference of the rear case 51. As shown in FIG. 2A and FIG. 4, the rear case 51 may be fixed to the outer circumferential portion of the wall part 46a of the support 46 with a plurality of screws 81 respectively fitted to the attachment holes. By detaching the screws 81, it is possible to detach the rear wheel 40 from the rear arm 50. Thus, the maintenance work of, for example, the electric motor 30 can be made easy.

As shown in FIG. 4, the screws 81 may be inserted into the attachment holes provided to the rear case 51 and screw holes provided to the outer circumferential portion of the wall part 46a of the support 46 from the left side thereof (at the side where the rear arm 50 is arranged). As shown in FIG. 2A, the screws 81 may be exposed in the left side view of the vehicle body. Therefore, the detachment work of the screws 81 becomes easy.

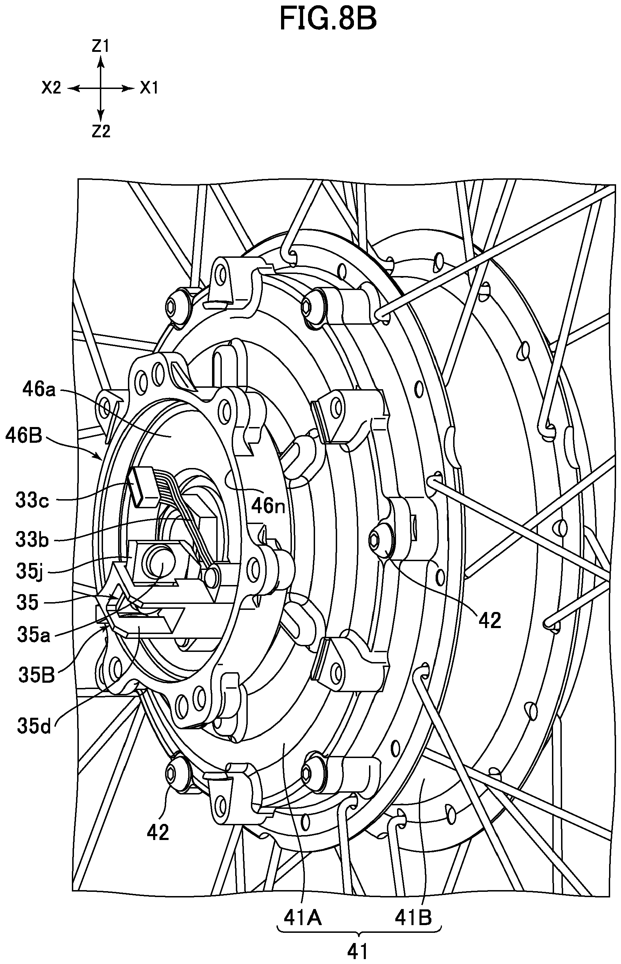

The wall part 46a may have a disc-like shape (see FIG. 8B). The wall part 46a may be larger in outside diameter than the stator holding member 46A as shown in FIG. 4. The outside diameter of the wall part 46a may correspond to the outside diameter of the rear case 51. Thus, it is possible to simplify the fixation structure of the wall part 46a and the rear case 51. The outer circumferential edge (a portion where the screw holes are formed) of the wall part 46a may be larger in outside diameter than the bearing 49A which supports the rear-wheel hub 41.

The coupling member 46B and the stator holding member 46A may be components formed individually. These may be fixed to each other with a fixation tool such as a screw or a bolt. In the drive unit 10, as shown in FIG. 4, the coupling member 46B and the stator holding member 46A may include a hole penetrating the coupling member 46B and the stator holding member 46A along the rotational center line Ax1 of the rear wheel 40. A bolt 46f may be fitted to this hole. The coupling member 46B and the stator holding member 46A may be fixed to each other with the bolt 46f and a nut 46g (see FIG. 3B). The bolt 46f may be fitted to the through hole provided to the coupling member 46B and the stator holding member 46A from, for example, the left side of the coupling member 46B. The nut 46g may be fixed to the bolt 46f at the right side of the stator holding member 46A.

The bolt 46f and the nut 46g for fixing the coupling member 46B and the stator holding member 46A to each other may include the hole penetrating these in the direction along the rotational center line Ax1. In other words, the bolt 46f may have a cylindrical shape. The transmission shaft 21 may be arranged inside the through hole. The transmission shaft 21 is made rotatable inside the through hole. According to this fixation structure, it is possible to reduce the number of components necessary to fix the coupling member 46B and the stator holding member 46A to each other, and thus it is possible to simplify the assembling work of these members.

Between the inner circumferential surface of the support 46 (the bolt 46f) and the outer circumferential surface of the transmission shaft 21, there may be ensured a clearance. Thus, there is no friction between the transmission shaft 21 and the support 46, and it is possible for the transmission shaft 21 to smoothly rotate.

As shown in FIG. 4, the transmission shaft 21 may have a coupling part 21b located at the left side of the support 46. The coupling part 21b is housed in the rear case 51, and is not required to be exposed to the outside. Due to this structure, it is possible to prevent external moisture and dust from entering the inside of the rear-wheel hub 41 through the clearance between the inner circumferential surface of the support 46 and the outer circumferential surface of the transmission shaft 21.

It should be noted that the fixation structure of the stator holding member 46A and the coupling member 46B is not limited to the example of the drive unit 10. For example, the bolt 46f may be inserted into the through hole provided to the stator holding member 46A and the coupling member 46B from the right side of the stator holding member 46A. Further, in another example, it is possible to provide a plurality of attachment holes arranged side by side in a circumferential direction surrounding the transmission shaft 21 to each of the stator holding member 46A and the coupling member 46B. Further, the stator holding member 46A and the coupling member 46B may be fixed to each other with bolts or screws to be inserted into the attachment holes.

As shown in FIG. 3B, the stator holding member 46A may include a recessed part 46h opening rightward. The nut 46g may be arranged inside the recessed part 46h. More specifically, the whole of the nut 46g may be arranged inside the recessed part 46h. Thus, it is possible to suppress the increase in size of the rear-wheel hub 41 in the direction along the rotational center line Ax1.

In the drive unit 10, as shown in FIG. 3B, a mechanism for coupling the transmission shaft 21 and the rear-wheel hub 41 to each other may be housed inside the recessed part 46h. Specifically, the one-way clutch 23, and a bearing 47B which supports the right end of the transmission shaft 21 may be housed inside the recessed part 46h. Thus, it is possible to suppress the increase in size of the rear-wheel hub 41 in the direction along the rotational center line Ax1.

The coupling member 46B may have a central portion 46j (see FIG. 4) arranged inside an inner edge of the left wall 41A of the rear-wheel hub 41. A collar 82 may be fitted at the outer side of the central portion 46j. The bearing 49A at the left side supporting the rear-wheel hub 41 may be arranged between the collar 82 and the inner edge of the left wall 41A. Further, between the collar 82 and the inner edge of the left wall 41A, there may be arranged a seal member 49C. The seal member 49C is press-fitted in the inner edge of the left wall 41A, and is thus fixed to the inner edge. An inner circumferential portion of the seal member 49C and an outer circumferential surface of the collar 82 slide on each other. The collar 82 makes the smooth sliding motion possible.

### [Electric Wire Structure]

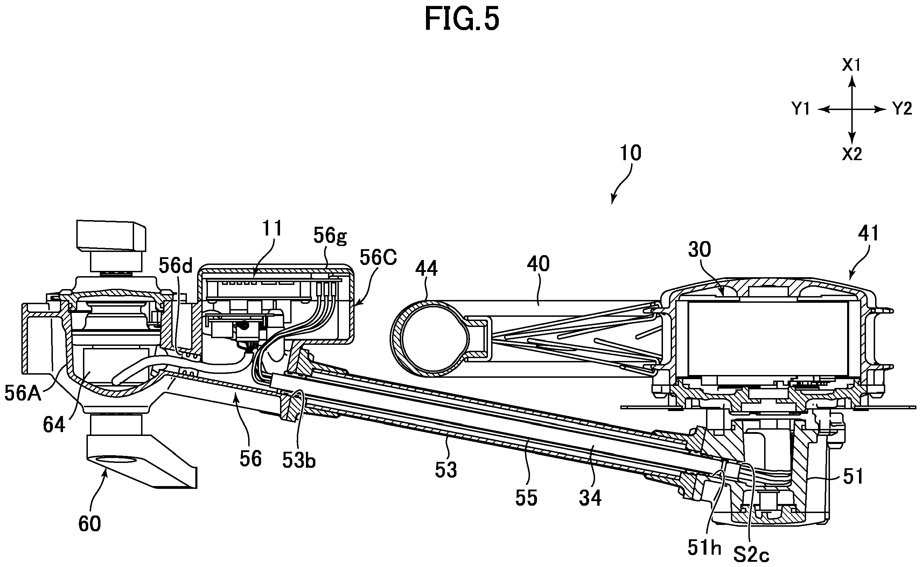

As described above, the drive unit 10 has a motor control device 11. The motor control device 11 may be housed in a circuit housing section 56C fixed to a front portion of the rear arm 50 (see FIG. 5). The motor control device 11 and the electric motor 30 are electrically coupled to each other with a plurality of electric wires. Specifically, the motor control device 11 and the electric motor 30 may be coupled to each other with a plurality of power supply wires (e.g., three power supply wires) for supplying a drive current from the motor control device 11 to the electric motor 30, and a plurality of signal wires for transmitting signals corresponding to a phase and a rotational speed of the electric motor 30. In the specification, the plurality of power supply wires, and the plurality of signal wires described above, and connectors 33c, 34c, and a terminal block 35 described later are referred to as an electric wire structure.

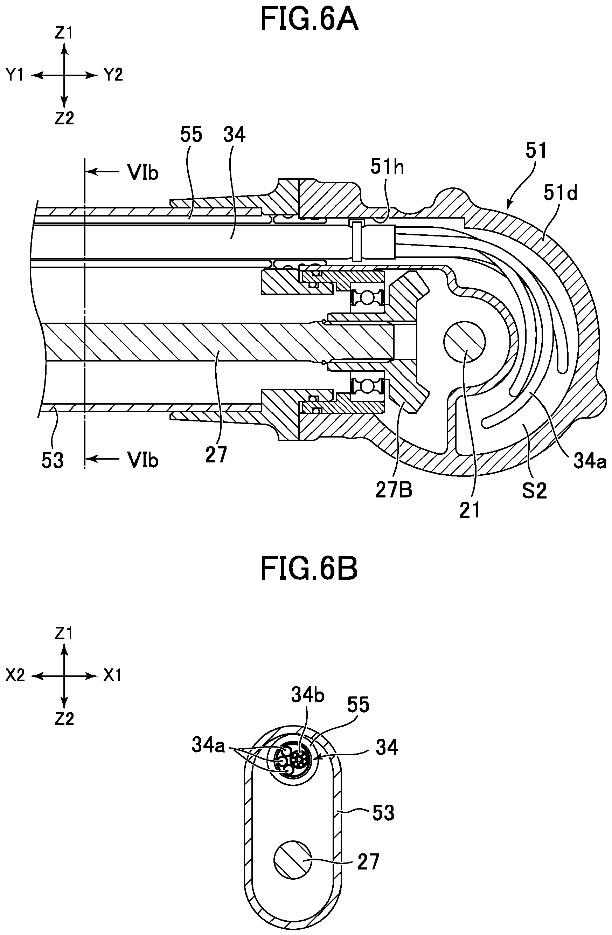

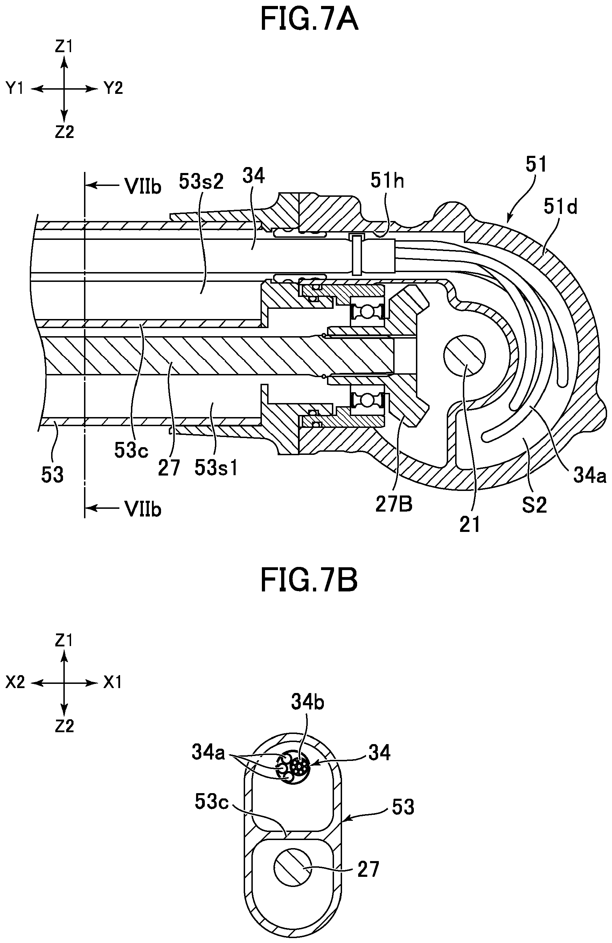

As shown in FIG. 4, the electric wire structure may have a first electric wire part 33 extending from the electric motor 30. The first electric wire part 33 may include a power supply wire 33a and a signal wire 33b described above. Further, as shown in FIG. 5, the electric wire structure may have a second electric wire part 34 arranged along the rear arm 50. The second electric wire part 34 may also have a power supply wire 34a and a signal wire 34b (see FIG. 6B and FIG. 7B).

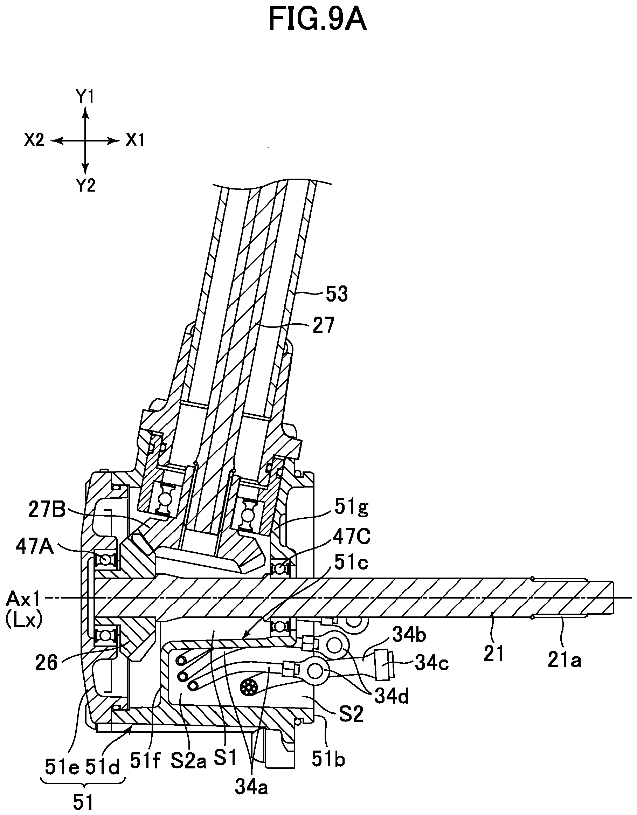

Further, the electric wire structure has an electric wire coupling part for coupling the first electric wire part 33 and the second electric wire part 34 to each other. The electric wire coupling part may have, for example, the terminal block 35 (see FIG. 4 and FIG. 8B) for coupling the power supply wires 33a, 34a to each other. Further, the electric wire structure may have the connectors 33c, 34c (see FIG. 8B and FIG. 9A) disposed in end portions of, for example, the signal wires 33b, 34b as the electric wire coupling part. The connectors 33c, 34c are coupled to each other.

As shown in FIG. 4, the support 46 may have an electric wire path 46m formed therein. The electric wire path 46m may be a hole or a groove which extends along the rotational center line Ax1 of the rear wheel 40, and penetrates the support 46. The electric wire path 46m is located inside the seal member 49C and the bearing 49A.

Specifically, a central portion 46j of the coupling member 46B may have the electric wire path 46m formed therein. An outer circumferential surface of the stator holding member 46A may partially be exposed on the inside of the rear-wheel hub 41. An opening 46p at one end of the electric wire path 46m may be formed on the portion thus exposed. The electric wire path 46m may communicate the inside of the rear-wheel hub 41 and the inside of the rear case 51 with each other. Due to the above, it is possible to prevent the external moisture and dust from passing through the electric wire path 46m to enter the inside of the rear-wheel hub 41.

The electric wire structure including the electric wire parts 33, 34 may extend from the rear case 51 toward the inside of the rear-wheel hub 41 through the electric wire path 46m. The electric wire coupling part for coupling the first electric wire part 33 and the second electric wire part 34 to each other, namely the terminal block 35 and the connectors 33c, 34c in the example of the present disclosure, may be located between an end surface (a left side surface) of the rear case 51, and an end surface (a right side surface) of the rear-wheel hub 41. In other words, the electric wire coupling part may be located inside the rear case 51, in the electric wire path 46m, or inside the rear-wheel hub 41. More specifically, the electric wire coupling part may be located inside the rear case 51, in the electric wire path 46m, or inside the rear-wheel hub 41, and may be located at the left side of the stator 31. According to this structure, when detaching the rear wheel 40 from the rear arm 50, it becomes possible to easily perform coupling cancellation between the first electric wire part 33 and the second electric wire part 34, and thus, the detachment work can be made easier.

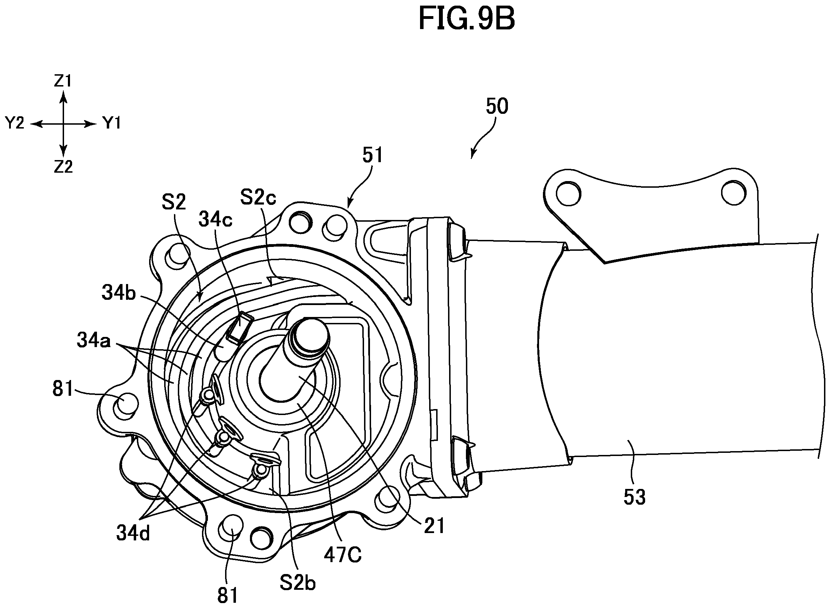

As shown in FIG. 4, a part of the terminal block 35 may be located inside the rear case 51. For example, a portion (specifically, the screw 35a (see FIG. 8B)) for coupling the terminals 33d, 34d (FIG. 4 and FIG. 9) of the power supply wires 33a, 34a to each other may be located inside the rear case 51. In other words, a portion (a third portion 35j described later) provided with the screw 35a in the terminal block 35 may be located at the left side of an edge (a right end surface 51b; see FIG. 9A) at the rear-wheel hub 41 side of the rear case 51. According to this structure, it is possible to effectively use a space in the rear case 51 for the arrangement of the terminal block 35 (the electric wire coupling part). Further, since the coupling structure is not located in the electric wire path 46m and the rear-wheel hub 41, it is possible to make the cross-sectional area of the electric wire path 46m small, and further, it is possible to use the space in the rear-wheel hub 41 for the arrangement of the electric motor 30.

The power supply wire 33a and the terminal 33d may be molded with resin to form the terminal block 35. In other words, the terminal block 35 and the power supply wire 33a can be molded by insert molding. In the insert molding, in a state in which the power supply wire 33 that has the terminal 33d attached thereon is disposed in a die, melted resin as a material of the terminal block 35 is supplied to the inside of the die. Thus, the terminal block 35 having the power supply wire 33a and the terminal 33d is formed.

The power supply wire 33a may have a terminal in an end portion at an opposite side to the terminal 33d. To this terminal, there may be coupled a coil wire of the stator 31. This terminal may also be molded with resin together with the power supply wire 33a.

The terminal block 35 may be attached to, for example, the stator 31. As shown in FIG. 4, the terminal block 35 may be attached to the left side surface of the stator 31. The terminal block 35 may have a first portion 35h arranged along the left side surface of the stator 31, a second portion 35i extending in the axial direction, and the third portion 35j located in a left end portion. The second portion 35i protrudes leftward beyond the electric wire path 46m. The third portion 35j located in the left end portion of the second portion 35i may be provided with the terminal 33d of the power supply wire 33a, and the screw 35a for fixing the terminal 34d of the power supply wire 34a to the terminal 33d.

Unlike the power supply wire 33a, the signal wire 33b may be an electric wire having a core wire formed of a conducting body, and a coat formed of resin. The signal wire 33b may be arranged along the terminal block 35, and may extend leftward passing through the electric wire path 46m. The signal wire 33b may be attached to the terminal block 35.

The whole or a part of the connector 34c disposed in an end portion of the signal wire 34b and the connector 33c disposed in an end portion of the signal wire 33b may be located inside the rear case 51. More specifically, at least a part of the connectors 33c, 34c may be located at the left side of an edge (a right end surface 51b; see FIG. 9A) at the rear-wheel hub 41 side of the rear case 51.

According to such an arrangement of the coupling structure of the signal wires 33b, 34b, it is possible to effectively use the space in the rear case 51. Further, since it is possible to reduce in size or eliminate the coupling structure located in the electric wire path 46m and the rear-wheel hub 41, it is possible to make the cross-sectional area of the electric wire path 46m small, and further, it is possible to use the space in the rear-wheel hub 41 for the arrangement of the electric motor 30.

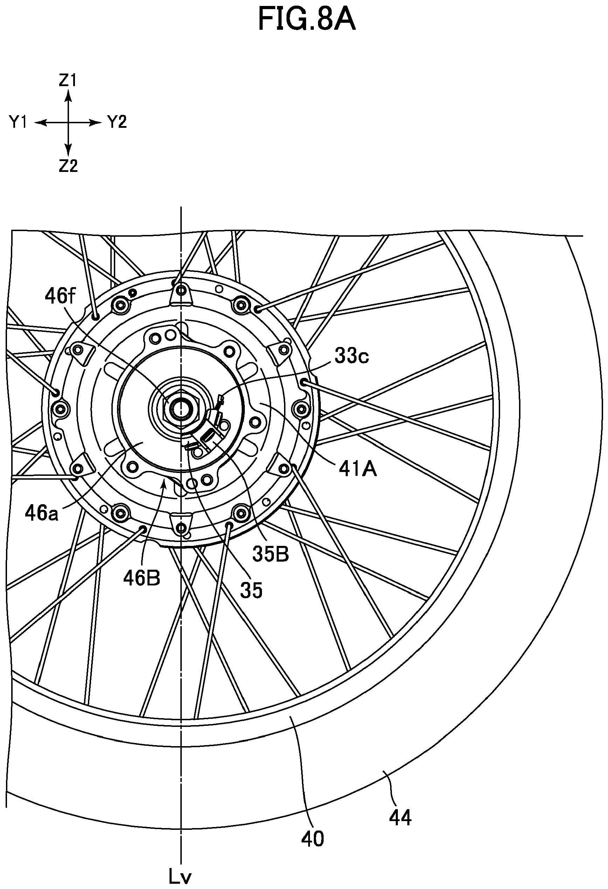

As shown in FIG. 8B, a reinforcing member 35B may be attached to the coupling member 46B of the support 46. The reinforcing member 35B may be fitted to the terminal block 35 to hold the terminal block 35. The reinforcing member 35B may be attached to, for example, a left side surface of the coupling member 46B to hold the second portion 35i and the third portion 35j of the terminal block 35. According to the above, it is possible to ensure the strength of the terminal block 35 by the reinforcing member 35B while thinning a portion (the second portion 35i) located inside the electric wire path 46m in the terminal block 35. The reinforcing member 35B may have a wall part 35d located between the two terminals 33d adjacent to each other.

### [Length of Electric Wires]

As shown in FIG. 8B, the first electric wire part 33 may have a length with which the first electric wire part 33 passes through the electric wire path 46m, and the end portion of the first electric wire part 33 reaches the outside (the left side) of the rear-wheel hub 41. For example, in the state in which the rear-wheel hub 41 is detached from the rear arm 50, the end portion of the first electric wire part 33 may be located outside the rear-wheel hub 41. According to this structure, the coupling work of the first electric wire part 33 and the second electric wire part 34 can be made easy.

As shown in FIG. 8B, the third portion 35j (the portion in which the terminal 33d of the power supply wire 33a is disposed, and to which the screw 35a is attached) of the terminal block 35 may protrude leftward more than the side surface (a left surface of the wall part 46a) at the rear case 51 side of the coupling member 46B. More desirably, the third portion 35j may protrude leftward more than an end surface (a left end surface 46n) at the rear case 51 side of the coupling member 46B.

Further, when the signal wire 33b is pulled outward (leftward) in the state in which the rear-wheel hub 41 is detached from the rear arm 50, it is possible for the connector 33c to be located at the left side of a side surface (a left surface of the wall part 46a) at the rear case 51 side. More desirably, the connector 33c may be located at the left side of the left end surface 46n at the rear case 51 side. Thus, the coupling work of the first electric wire part 33 (the power supply wire 33a and the signal wire 33b) and the second electric wire part 34 (the power supply wire 34a and the signal wire 34b) can be made easy.

It should be noted that the terminal block 35 of the drive unit 10 may be fixed to the coupling member 46B of the support 46 instead of the stator 31. In this case, the power supply wire 33a of the first electric wire part 33 may be an electric wire having a coat made of resin instead of the electric wire molded in the terminal block 35. In this case, the power supply wire 33a may be extracted from the rear-wheel hub 41, and the terminal 33d attached to the end portion of the power supply wire 33a may be coupled to the terminal block 35 with a screw. Further, the terminal 34d of the power supply wire 34a may also be coupled to the terminal block 35 with a screw. Further, the power supply wire 33a and the power supply wire 34a may electrically be coupled to each other through a conducting body arranged in the terminal block 35. In this case, by detaching only the power supply wire 34a from the terminal block 35, it is possible to detach the rear-wheel hub 41 from the rear arm 50. The position of the terminal block 35 at which the power supply wire 34a (the terminal 34d) is coupled may protrude leftward more than the end surface (the left end surface 46n) at the rear case 51 side of the coupling member 46B.

As still another example, the drive unit 10 is not required to have the terminal block 35. In this case, when the power supply wire 33a is pulled outward (leftward) in the state in which the rear-wheel hub 41 is detached from the rear arm 50, it is possible for the connector disposed in the end portion of the power supply wire 33a to be located at the left side of the side surface (the left surface of the wall part 46a; see FIG. 8B) at the rear case 51 side of the coupling member 46B. More desirably, the connector disposed in the end portion of the power supply wire 33a may be located at the left side of the end surface 46n at the rear case 51 side of the coupling member 46B.

As shown in FIG. 9A, the second electric wire part 34 may also have a length exceeding an end surface (a right end surface) 51b at the support 46 side of the rear case 51. For example, when the operator pulls the second electric wire part 34 outward (rightward) in the state in which the rear-wheel hub 41 is detached from the rear arm 50, the end portion of the second electric wire part 34 may be located outside the rear case 51. According to this structure, the coupling work of the first electric wire part 33 and the second electric wire part 34 may be made easy.

In the drive unit 10, as shown in FIG. 9A, when the power supply wire 34a is pulled outward (rightward) in the state in which the rear-wheel hub 41 is detached from the rear arm 50, these terminals 34d may be located at the right side of the right end surface 51b of the rear case 51. Similarly, when the signal wire 34b is pulled outward (rightward), the connector 34c may be located at the right side of the right end surface 51b of the rear case 51. Thus, the coupling work of the first electric wire part 33 (the power supply wire 33a and the signal wire 33b) and the second electric wire part 34 (the power supply wire 34a and the signal wire 34b) can be made easy.

At least a part of the electric wire coupling part may be located at the rear side of the transmission shaft 21. For example, as shown in FIG. 8A, it is possible for the terminal block 35 to be located at the rear side of a vertical line Lv passing the rotational center line Ax1 of the transmission shaft 21. Further, it is also possible for the connector 33c to be located at the rear side of the vertical line Lv. As shown in FIG. 9A, it is possible for the terminal 34d of the power supply wire 34a to be able to be located at the rear side of the vertical line Lv passing the rotational center line Ax1 of the transmission shaft 21. Further, it is also possible for the connector 34c to be able to be located at the rear side of the vertical line Lv. According to the above, it is possible to prevent the shaft case 53 of the rear arm 50 from becoming an obstacle of the coupling work of the first electric wire part 33 (the power supply wire 33a and the signal wire 33b) and the second electric wire part 34 (the power supply wire 34a and the signal wire 34b).

It should be noted that the arrangement of the terminal block 35, the terminals 33d, 34d, and the connectors 33c, 34c is not limited to an example described here. For example, it is possible to adopt a configuration in which only a part of the terminal block 35 is located at the rear side of the vertical line Lv. Further, it is possible to adopt a configuration in which only some of the terminals 34d are located at the rear side of the vertical line Lv.

In still another example, the terminal block 35 may be fixed to the rear case 51. In this case, a part of the terminal block 35 (e.g., the third portion 35j to which the terminals 33d, 34d are fixed) may be located at the right side of the end surface (the right end surface 51b; see FIG. 9A) at the rear-wheel hub 41 side of the rear case 51.

In still another example, as described above, the terminal block 35 is not necessarily required to be used to couple the power supply wires 33a, 34a. For example, connectors may be provided respectively to the end portions of the power supply wires 33a, 34a, and the two connectors may be coupled to each other.

In still another example, when the electric wire path 46m is large, a coupling part between the first electric wire part 33 (the power supply wire 33a and the signal wire 33b) and the second electric wire part 34 (the power supply wire 34a and the signal wire 34b) may be located inside the electric wire path 46m.

In still another example, the coupling part between the first electric wire part 33 (the power supply wire 33a and the signal wire 33b) and the second electric wire part 34 (the power supply wire 34a and the signal wire 34b) may be located in the rear-wheel hub 41.

### [Housing Chamber of Rear Case]

As shown in FIG. 9A, the rear case 51 may have a first housing chamber S1 which houses an engaging part between the drive shaft 27 and the transmission shaft 21. For example, in the first housing chamber S1, there may be housed a gear 27B fixed to an end portion of the drive shaft 27, and a gear 26 which is fixed to the transmission shaft 21, and is engaged with the gear 27B. When a chain or a belt is used as the power transmission mechanism, a sprocket or a pulley may be housed in the first housing chamber S1.

As shown in FIG. 9A and FIG. 9B, the rear case 51 may have a second housing chamber S2 partitioned from the first housing chamber S1. The electric wire structure including the electric wire parts 33, 34 (specifically, the power supply wires 33a, 34a and the signal wires 33b, 34b) may pass through the second housing chamber S2. According to this structure, it is possible to prevent, for example, a lubricant to be supplied to the gears 27B, 26 from adhering to the electric wire structure. Further, it is possible to prevent the electric wire parts 33, 34 from having contact with a rotating section (the gears 27B, 26).

As shown in FIG. 9A, the rear case 51 may have a case main body 51d and a case lid 51e. The first housing chamber S1 may open leftward, and the case lid 51e may be attached to the case main body 51d so as to close the opening. In contrast, the second housing chamber S2 opens rightward. When the support 46 of the rear-wheel hub 41 is fixed to the rear case 51, the opening of the second housing chamber S2 is closed (see FIG. 4) by the support 46. The rear case 51 may have a partition wall 51c for partitioning the first housing chamber S1 and the second housing chamber S2 from each other.

As shown in FIG. 9A, a part S2a of the second housing chamber S2 may be located at the outer side in the radial direction of the transmission shaft 21 with respect to the first housing chamber S1. According to this structure, it is possible to effectively use the space in the rear case 51, and it is possible to prevent an increase in the rear case 51 in a direction along the rotational center line Ax1. As shown in FIG. 4, in the state in which the rear-wheel hub 41 is attached to the rear arm 50, the connectors 33c, 34c and the third portion 35j (the portion where the terminal 34d is attached to the terminal 33d) of the terminal block 35 may be located at the outer side in the radial direction of the transmission shaft 21 with respect to the first housing chamber S1.

As shown in FIG. 9B, the second housing chamber S2 may be formed so as to surround the transmission shaft 21. Further, the electric wire structure (specifically, the power supply wire 34a and the signal wire 34b of the second electric wire part 34) passing through the second housing chamber S2 may warp so as to surround the transmission shaft 21. Thus, it is allowed to gently bend the electric wire structure, and the coupling work of the first electric wire part 33 and the second electric wire part 34 can be made easy.

As shown in FIG. 9B, a one end S2b of the second housing chamber S2 in a circumferential direction of the transmission shaft 21 may be distant as much as a value larger than 180 degrees in the circumferential direction of the transmission shaft 21 from the other end S2c (here, the other end S2c is an opening through which the power supply wire 34a and the signal wire 34b pass toward the shaft case 53). Since it is possible to make the bending of the electric wire structure gentler in this way, the coupling work of the first electric wire part 33 and the second electric wire part 34 can be made easy.

### [Shaft Case]

As described above, the rear arm 50 may have the shaft case 53 (see FIG. 2A) which is located at the front side of the rear case 51, and houses the drive shaft 27. As shown in FIG. 5, the second electric wire part 34 may extend frontward passing through an electric wire path 51h (a path extending from the end portion S2c (see FIG. 9B) of the second housing chamber S2) provided to the rear case 51. The second electric wire part 34 may be housed in the shaft case 53.

As shown in FIG. 5, at the front end of the shaft case 53, there may be formed an electric wire path 53b communicated with the front case 56. The second electric wire part 34 may enter the front case 56 passing through the electric wire path 53b. Further, the second electric wire part 34 may be coupled to the motor control device 11 arranged in the circuit housing section 56C provided to the rear portion of the front case 56. Therefore, it is possible to prevent the second electric wire part 34 from being exposed to the outside.

As shown in FIG. 6A, the electric wire path 51h may be located above the drive shaft 27. Further, the second electric wire part 34 may be arranged above the drive shaft 27. Thus, it is possible to reduce the width in the horizontal direction of the shaft case 53. In contrast, the rear portion of the second electric wire part 34 may warp so as to surround the transmission shaft 21 inside the second housing chamber S2. Further, a rear portion (a rear portion of the power supply wire 34a in FIG. 6A) of the second electric wire part 34 may extend up to a position lower than the transmission shaft 21. Due to this structure, it is possible to prevent rapid bending of the second electric wire part 34, and thus, the coupling work of the second electric wire part 34 and the first electric wire part 33 can be made easy.

As shown in FIG. 6B, a support pipe 55 may be housed inside the shaft case 53. Further, the second electric wire part 34 may be made to run through the support pipe 55. Due to the support pipe 55, the second electric wire part 34 is separated from the drive shaft 27. As a result, it is possible to prevent the second electric wire part 34 from being distorted due to the vibration of the bicycle 1 to make contact with the drive shaft 27 as a rotating body. It should be noted that the support pipe 55 may be made of resin such as plastic, or may also be made of metal.

FIG. 7A and FIG. 7B are diagrams showing a modified example of the shaft case 53 shown in FIG. 6A and FIG. 6B, and substantially the same in cutting plane as FIG. 6A and FIG. 6B. In the example shown in FIG. 7A and FIG. 7B, the shaft case 53 has a partition wall 53c for partitioning a shaft housing chamber 53s1 in which the drive shaft 27 is arranged, and an electric wire housing chamber 53s2 in which the second electric wire part 34 is arranged. According to this structure, it is possible to prevent the second electric wire part 34 and the drive shaft 27 from making contact with each other. Further, it is possible to increase the strength of the shaft case 53. As a result, it is possible to protect the second electric wire part 34 and the drive shaft 27. The partition wall 53c may extend from the rear end to the front end of the shaft case 53.

### [Front Case]

As shown in FIG. 5, the circuit housing section 56C may be located between the crank shaft 61 and the rear wheel 40. At least a part of the circuit housing section 56C may overlap the rear wheel 40 in a front view of the vehicle body. At least a part of the circuit housing section 56C may overlap the crank shaft 61 in the front view of the vehicle body. According to this arrangement of the circuit housing section 56C, it is possible to prevent an external object from colliding with the circuit housing section 56C.

As shown in FIG. 5, the circuit housing section 56C may open rightward. In other words, the circuit housing section 56C may open toward an opposite side to the rear arm 50. It is possible for a housing section lid 56g to close the opening of the circuit housing section 56C. According to this structure, it becomes easy to detach the housing section lid 56g for, for example, an inspection of the motor control device 11. The motor control device 11 may be attached to an inner surface of the housing section lid 56g.

As shown in FIG. 5, the front case 56 may have a shaft housing section 56A for housing the crank 61. The shaft housing section 56A and the circuit housing section 56C may be formed integrally with each other. Thus, the number of components may be reduced. On a wall at the front side of the circuit housing section 56C, there may be formed a through hole 56d. The circuit housing section 56C may be communicated with the inside of the shaft housing section 56A through the through hole 56d. Electric wires coupled to the torque sensor 64 may be coupled to the motor control device 11 located inside the circuit housing section 56C through the through hole 56d.

### [Support of Transmission Shaft by Bearings]

As shown in FIG. 9A, the case lid 51e may support a left portion of the transmission shaft 21 via a bearing 47A. The rear-wheel hub 41 may support a right portion of the transmission shaft 21 via the bearing 47B (see FIG. 3B). In the drive unit 10, a right member 41B of the rear-wheel hub 41 may be supported by the support 46 via the bearing 49B. Further, the right member 41B may support the right portion of the transmission shaft 21 via the bearing 47B. In other words, a right end of the transmission shaft 21 may indirectly be supported by the support 46. The support structure for the transmission shaft 21 is not limited to the example of the drive unit 10. For example, the bearing 47B at the right side may be located inside the support 46.

As shown in FIG. 8B and FIG. 9A, when separating the rear-wheel hub 41 from the rear arm 50, the right end portion of the transmission shaft 21 is separated from the bearing 47B and the one-way clutch 23, and the transmission shaft 21 is kept being supported by the rear case 51. As shown in FIG. 9A, a spline 21a may be formed on an outer circumferential surface of the right end portion of the transmission shaft 21. A spline may also be formed on an inner circumferential surface of the one-way clutch 23. The transmission shaft 21 engages with the one-way clutch 23 with this spline, and may be allowed to be separated from the one-way clutch 23 and the bearing 47B in a direction along the rotational center line Ax1.

As shown in FIG. 9A, the rear case 51 may support the transmission shaft 21 via a bearing 47C arranged between the bearings 47A, 47B which respectively support the both end portions of the transmission shaft 21. As described above, the rear case 51 has the partition wall 51c. The partition wall 51c is provided with an opening through which the transmission shaft 21 passes. The bearing 47C may be fitted to an inner edge of the opening. The partition wall 51c may support the transmission shaft 21 via the bearing 47C. According to this structure, when separating the rear-wheel hub 41 from the rear arm 50, a posture of the transmission shaft 21 with respect to the rear case 51 can be kept. As shown in FIG. 9A, the partition wall 51c may have a left portion 51f, and a right portion 51g separated rightward from the left portion 51f. The transmission shaft 21 may extend rightward passing through an opening provided to the right portion 51g. The bearing 47C may be arranged inside the opening. The bearing 47C is, for example, a ball bearing, but may be a sliding bearing formed of oil-retaining metal or resin.

### [Modified Example of Positioning Structure of Bearing]

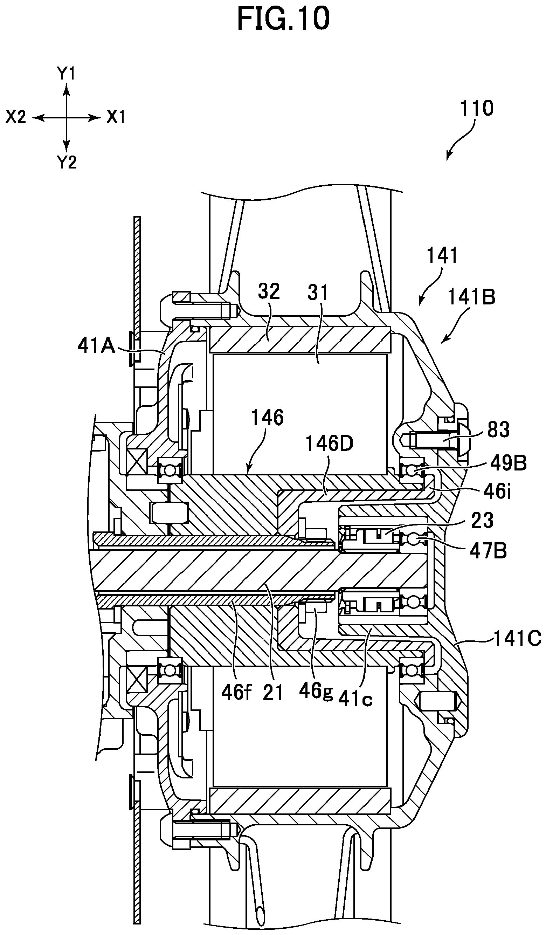

In the rear-wheel hub 41 described with reference to FIG. 3B and so on, the bearing 49B at the right side which supports the rear-wheel hub 41 is press fitted to the right member 41B, and is held by the right member 41B. The right member 41B is fixed to the left wall 41A. Further, the left wall 41A is positioned by the bearing 49A, which is press fitted inside the left wall 41A, being clamped by the stator holding member 46A and the coupling member 46B. Therefore, a displacement rightward of the bearing 49B located at the right side is limited by the left member 41A and the bearing 49A located at the left side. Unlike the above, it is possible to provide the rear-wheel hub 41 with a dedicated member to limit the displacement rightward of the bearing 49B, in other words, determine the position of the bearing 49B. According to this structure, it is possible to limit the motion of the bearing 49B in a direction along the rotational center line Ax1. Further, it is possible to set a load (precompression) in a direction along the rotational center line Ax1 on the bearing 49B to an appropriate value. FIG. 10 is a cross-sectional view showing a rear-wheel hub 141 as the modified example. A difference from the rear-wheel hub described hereinabove will hereinafter be described. To items not described with respect to the rear-wheel hub 141, there may be applied the structure of the rear wheel hub described hereinabove, or a structure of the rear wheel hub described hereinafter.

In FIG. 10, a support 146 of a drive unit 110 may have a positioning member 146D in addition to the stator holding member 46A and the coupling member 46B. The positioning member 146D is a member formed separately from the stator holding member 46A. The positioning member 146D may be attached to the stator holding member 46A with the nut 46g. The stator holding member 46A may have a recessed part in the right portion thereof. Inside the recessed part, there is arranged the positioning member 146D in addition to the one-way clutch 23, the bearing 47B, and so on. The positioning member 146D may have a flange 46i at a right end thereof. The flange 46i may bias the bearing 49B, which supports the rear-wheel hub 41, leftward. The bearing 49B may be clamped by a step formed on the outer circumferential surface of the stator holding member 46A and the flange 46i to thereby be positioned in a direction along the rotational center line Ax1.

In FIG. 10, the rear-wheel hub 141 of the drive unit 110 may have the left wall 41A, a right member 141B, and a lid member 141C. The lid member 141C is a member formed separately from the right member 141B. The right member 141B may have an opening at a position corresponding to the transmission shaft 21 and the positioning member 146D. The lid member 141C may be attached to an edge of the opening with a fixation tool such as a screw 83. The lid member 141C may have the holding cylindrical part 41c protruding leftward. Inside the holding cylindrical part 41c, there may be arranged the one-way clutch 23, the bearing 47B, and the right end of the transmission shaft 21.

An outer ring of the bearing 49B at the right side may be press fitted to the right member 141B. After assembling the left wall 41A, the right member 141B, the stator holding member 46A, and so on, the positioning member 146D may be attached to a recessed part of the stator holding member 46A from the right side in a state in which the lid member 141C is not attached to an opening of the right member 141B. The coupling member 46B, the stator holding member 46A, and the positioning member 146D may be fixed to each other with the bolt 46f and the nut 46g, and then, the opening of the right member 141B is blocked by the lid member 141C.

### [Modified Example of Transmission Shaft]

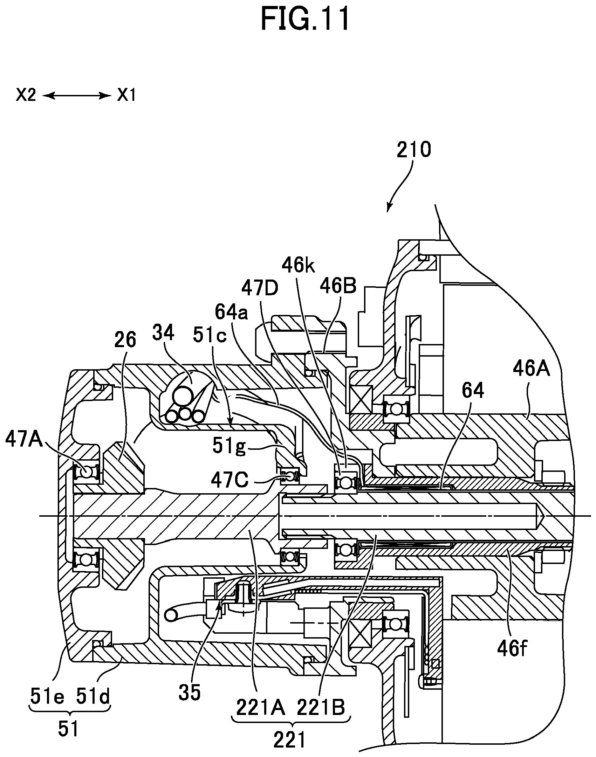

In the drive unit 10 shown in FIG. 3B and so on, the transmission shaft 21 continues from the right end to the left end. Unlike the above, the transmission shaft 21 may include two shafts coupled to each other in a direction along the rotational center line Ax1. Further, the left shaft may be supported by the rear case 51, and the right shaft may be supported by the support 46. FIG. 11 is a cross-sectional view showing the drive unit 210 as the present example. A difference between the drive unit 210 and the drive units described hereinabove will hereinafter be described. To items not described with respect to the drive unit 210, there may be applied the structure of the drive unit described hereinabove, or a structure of the drive unit described hereinafter.

As shown in FIG. 11, in the drive unit 210, the transmission shaft 221 has a left shaft 221A and a right shaft 221B. A left end of the left shaft 221A may be supported by the case lid 51e of the rear case 51 via the bearing 47A similarly to the drive unit 10 shown in FIG. 3B and so on. A right end of the left shaft 221A may be supported by the bearing 47C fitted to an inner edge of an opening (an opening provided to the right portion 51g) of the partition wall 51c formed in the rear case 51.

As shown in FIG. 11, a left end of the right shaft 221B may be supported by the bolt 46f via a bearing 47D. In the example shown in this drawing, the bolt 46f has a recessed part, which opens leftward, at the left end. The bearing 47D may be held inside the recessed part. The right shaft 221B may be fitted inside the bearing 47D, and the left end of the right shaft 221B may be supported by the bolt 46f via the bearing 47D. A right end of the right shaft 221B may be supported by the support 46 via the right member 41B of the rear-wheel hub 41 and the bearing 47B similarly to the drive unit 10 shown in, for example, FIG. 3B. Alternatively, the right end of the right shaft 221B may be supported by the support 46 via the lid member 141C and the bearing 47B similarly to the drive unit 110 shown in, for example, FIG. 10.

The left shaft 221A and the right shaft 221B are coupled to each other so that the power can be transmitted. In FIG. 11, the left shaft 221A and the right shaft 221B may be coupled to each other with the spline. The left shaft 221A and the right shaft 221B can be separated from each other in a direction along the rotational center line Ax1.

According to this structure, when the rear-wheel hub 41 is detached from the rear arm 50, the left shaft 221A is held by the rear arm 50, and the right shaft 221B is held by the rear-wheel hub 41. When attaching the rear-wheel hub 41 to the rear arm 50, the right shaft 221B is coupled to the left shaft 221A. According to the above, the work of attaching the rear-wheel hub 41 to the rear arm 50 can be made easier.

### [Modified Example of Torque Sensor Position]

As described with reference to FIG. 3A, in the drive unit 10, the torque sensor 64 for detecting the tread force acting on the pedals 63 is provided to the crank shaft 61. The position of the torque sensor 64 is not limited thereto. In the drive unit 210 shown in FIG. 11, the torque sensor 64 is provided to the right shaft 221B. More particularly, the torque sensor 64 is attached to an inner circumferential surface of the through hole of the bolt 46f in which the right shaft 221B is inserted. An electric wire 64a coupled to the torque sensor 64 may be coupled to the motor control device 11 passing through the second housing chamber S2 of the rear case 51, and the shaft case 53 similarly to the electric wire structure including the electric wire parts 33, 34. In this structure, an electric wire path 46k through which the electric wire 64a passes may be formed in the bolt 46f. The torque sensor 64 is, for example, a sensor (e.g., a magnetostrictive sensor) for outputting a signal corresponding to torsion of the right shaft 221B.

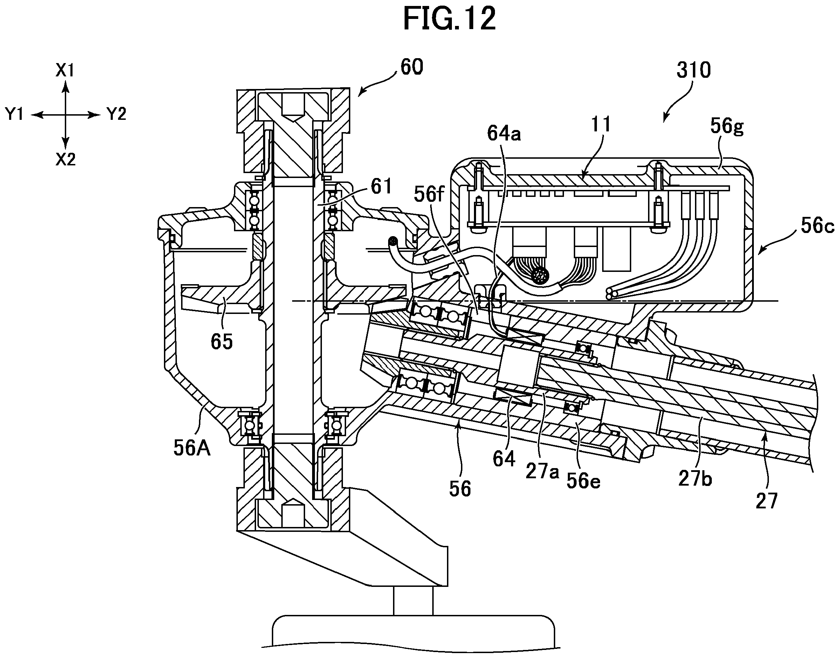

As a still another example, the torque sensor 64 may be provided to the drive shaft 27. FIG. 12 is a diagram showing a drive unit 310 having such a structure. The drawing is substantially the same in cutting plane as FIG. 3A.

The drive shaft 27 has a detection target shaft in a part in the extending direction thereof. In the example shown in FIG. 12, the drive shaft 27 has a detection target shaft 27a in a foremost portion thereof. A shaft main body 27b and the detection target shaft 27a of the drive shaft 27 may be engaged with each other using a spline. The torque sensor 64 may be arranged so as to surround the detection target shaft 27a. A sensor holder 56e having a cylindrical shape may be arranged inside the front case 56. The torque sensor 64 may be attached to an inner circumferential surface of the sensor holder 56e. The electric wire 64a extending from the torque sensor 64 may be coupled to the motor control device 11 housed in the circuit housing section 56C passing through the electric wire path 56f provided to the sensor holder 56e and the front case 56. The torque sensor 64 is, for example, a sensor (e.g., a magnetostrictive sensor) for outputting a signal corresponding to torsion of the detection target shaft 27a.

### [Modified Example of Brake System]

As described with reference to FIG. 2A, the brake system 71 provided to the drive unit 10 is a disc brake system. Unlike the above, the brake system may be a drum brake system. FIG. 13A and FIG. 13B are diagrams showing a drive unit 410 having the drum brake system. FIG. 13A is a left side view, and FIG. 13B is a cross-sectional view in the Xlllb-Xlllb line shown in FIG. 13A. A difference between the drive unit 410 and the drive units described hereinabove will hereinafter be described. To items not described with respect to the drive unit 410, there may be applied the structure of the drive units described hereinabove.

A brake system 471 (see FIG. 13B) has two brake shoes 471c, and brake linings 471d respectively attached to outer circumferential surfaces of the brake shoes 471c (see FIG. 13B). These may be supported by, for example, a pivot shaft 471e (see FIG. 13A) attached to the rear case 51. On the other hand, as shown in FIG. 13B, the rear-wheel hub 41 may have a brake ring 471f attached thereon. The brake ring 471f may be fixed to, for example, an inside of an annular part 41f protruding leftward from a left side surface of the left wall 41A of the rear-wheel hub 41. The brake shoes 471c may be arranged inside the brake ring 471f. Further, the brake system 471 may have a cam shaft 471a, and a cam shaft lever 471b for rotating the cam shaft 471a (see FIG. 13A). The cam shaft 471a may be supported by, for example, the rear case 51, and may be arranged between end portions of the two brake shoes 471c.

### [Conclusion]

(1) As described hereinabove, in the drive unit 10, the electric wire structure includes the first electric wire part 33 (the power supply wire 33a, the signal wire 33b) extending from the electric motor 30, the second electric wire part 34 (the power supply wire 34a, the signal wire 34b) extending along the rear arm 50, and the electric wire coupling part (the terminal block 35 and the connectors 33c, 34c) for electrically coupling the first electric wire part 33 and the second electric wire part 34 to each other. The rear-wheel hub 41 is provided with the support 46 for supporting the rear-wheel hub 41 so as to allow the rear-wheel hub 41 to rotate. The rear arm 50 has the rear case 51 which houses the engaging part between the drive shaft 27 and the transmission shaft 21. The rear case 51 is attached to the support 46 with at least one of the screws 81. The electric wire structure extends from the rear case 51 toward the inside of the rear-wheel hub 41 passing through the electric wire path 46m provided to the support 46. The electric wire coupling part is located between the left end surface of the rear case 51 and the right end surface of the rear-wheel hub 41. According to this drive unit 10, the detachment work of the rear wheel 40 from the rear arm 50 can be made easy. Further, regarding the drive unit having been described with reference to FIG. 10 through FIG. 13B, there can be obtained substantially the same advantages.
(2) The support 46 has the stator holding member 46A that has the stator 31 attached thereon, and the coupling member 46B. The wall part 46a of the coupling member 46B is located at the outer side of the rear-wheel hub 41 in the direction along the rotational center line Ax1 of the rear-wheel hub 41. The rear case 51 is attached to the outer circumferential portion of the wall part 46a of the coupling member 46B with the screws 81.
(3) The wall part 46a of the coupling member 46B is larger in diameter than the stator holding member 46A. This structure allows the number of attachment positions between the coupling member 46B and the rear case 51 to increase.
(4) The electric wire coupling part (the terminal block 35 and the connectors 33c, 34c) is arranged inside the rear case 51. This structure enables effective use of the space in the rear case 51, and prevents an increase in size in the horizontal direction of the rear-wheel hub 41 and the rear case 51.
(5) The first electric wire part 33 has a length which allows the first electric wire part 33 to pass through the electric wire path 46m and reache the outside of the rear-wheel hub 41. This structure simplifies the coupling work of the first electric wire part 33 and the second electric wire part 34.
(6) The second electric wire part 34 has a length that allows the second electric wire part 34 to exceed the end surface 51b of the rear case 51, where the end surface 51b is a surface toward the support 46. This structure simplifies the coupling work of the first electric wire part 33 and the second electric wire part 34.
(7) A part of the terminal block 35, which is the electric wire coupling part, protrudes from the side surface of the support 46 (the left surface of the wall part 46a), where the side surface is a surface toward the rear case 51. This structure simplifies the coupling work of the first electric wire part 33 and the second electric wire part 34.
(8) The rear case 51 has the first housing chamber S1 which houses the engaging part between the drive shaft 27 and the transmission shaft 21, and the second housing chamber S2 partitioned from the first housing chamber S1. The electric wire structure passes through the second housing chamber S2. This structure enables protection of the electric wire structure. For example, it is possible to prevent the lubricant used in the engaging part between the drive shaft 27 and the transmission shaft 21 from adhering to the electric wire structure. Further, it is possible to prevent the electric wire structure from making contact with the rotating section (e.g., the gear).
(9) The part S2a of the second housing chamber S2 is located at the outer side in the radial direction of the transmission shaft 21 with respect to the first housing chamber S1. This structure enables the space in the rear case 51 to effectively be used.
(10) The second housing chamber S2 surrounds the transmission shaft 21. This structure enables gentle bending of the electric wire structure passing through the second housing chamber S2, and thus, simplifies the coupling work of the first electric wire part 33 and the second electric wire part 34.
(11) The rear arm 50 has the shaft case 53 which is located at the front side of the rear case 51, and houses the drive shaft 27. The shaft case 53 includes, within the shaft case 53, the shaft housing chamber 53s1 which houses the drive shaft 27, and the electric wire housing chamber 53s2 which houses the second electric wire part 34.
(12) The rear case 51 supports the left end of the transmission shaft 21 via the bearing 47A at the left side. The support 46 supports the right end of the transmission shaft 21 via the bearing 47B at the right side. The right end of the transmission shaft 21 is configured to be separated from the support 46 when the rear case 51 and the rear-wheel hub 41 being separated from each other. The rear case 51 supports the transmission shaft 21 via the bearing 47C located between the bearings 47A, 47B. This structure enables the posture of the transmission shaft 21 with respect to the rear case 51 to be maintained, when the rear case 51 and the rear-wheel hub 41 being separated from each other. The bearing 47C is, for example, a ball bearing, but may be a sliding bearing formed of oil-retaining metal or resin.
   It should be noted that in contrast to the example described here, it is possible for the left end of the transmission shaft 21 to be able to be separated from the rear case 51 due to the separation of the rear case 51 and the rear-wheel hub 41 from each other. In this case, the support 46 may support the transmission shaft 21 via a bearing located between the bearings 47A, 47B. This structure enables the posture of the transmission shaft 21 with respect to the support 46 to be maintained, when the rear case 51 and the rear-wheel hub 41 being separated from each other.
(13) The screws 81 for fixing the rear case 51 and the support 46 to each other may be arranged outside the rear case 51. This structure simplifies the work of detaching the rear-wheel hub 41 from the rear arm 50.
(14) The plurality of screws 81 for fixing the rear case 51 and the support 46 to each other may be arranged in a circumferential direction surrounding the transmission shaft 21.

### [Still Another Example]

It should be noted that the drive unit and the bicycle proposed in the present disclosure are not limited to the examples described hereinabove, and a variety of modifications can be made.

For example, the first power system for transmitting the power of the electric motor 30 to the rear-wheel hub 41 may have the reduction mechanism. In this case, the drive unit 10 may have a plurality of shafts arranged along the rotational center line Ax1 of the rear wheel 40 as the transmission shaft. The locations of all or some of the shafts as the transmission shafts may be shifted from the rotational center line Ax1. Further, the second power system for transmitting the power of the crank shaft 61 to the rear-wheel hub 41 may have the speed change mechanism.

In the examples described above, the support 46 has the stator support member 46A, the coupling member 46B, and the bolt 46f for fixing the stator support member 46A and the coupling member 46B to each other. Unlike the above, the stator support member 46A and the coupling member 46B may integrally be molded. In this case, the support 46 is not required to have the bolt 46f.

## Claims

1. A drive unit (10) for a bicycle comprising:
a rear-wheel hub (41) provided to a rear wheel (40);
a first power system which includes an electric motor (30) including a stator (31) and a rotor (32), and housed in the rear-wheel hub (41), and is configured to transmit power of the electric motor (30) to the rear-wheel hub (41);
a rear arm (50) arranged in a first direction (X2) as one of a right side and a left side with respect to the rear wheel (40);
a second power system which includes a crank shaft (61) with pedals (63), a transmission shaft (21) arranged along a rotational center line (Ax1) of the rear-wheel hub (41), and a power transmission mechanism engaged with the crank shaft (61) and the transmission shaft (21) to transmit the power from the crank shaft (61) to the transmission shaft (21), and is configured to transmit the power to the rear-wheel hub (41) through the transmission shaft (21); and
an electric wire structure extending from the electric motor (30) and extending along the rear arm (50), wherein
a support (46) is provided to the rear-wheel hub (41), the support (46) supporting the rear-wheel hub (41) so as to allow the rear-wheel hub (41) to rotate,
the rear arm (50) has a first case (51) housing an engaging part between the power transmission mechanism and the transmission shaft (21),
the first case (51) is attached to the support (46) with at least one fixation tool,
the electric wire structure extends toward an inside of the rear-wheel hub (41) passing through an electric wire path (46m) formed in the support (46), **characterized in that** the electric wire structure includes a first electric wire part (33) extending from the electric motor (30), a second electric wire part (34) extending along the rear arm (50), and an electric wire coupling part (35,33c,34c) electrically coupling the first electric wire part (33) and the second electric wire part (34) to each other, wherein
the electric wire structure extends from the first case (51) toward the inside of the rear-wheel hub (41) passing through the electric wire path (46m) formed in the support (46), and
the electric wire coupling part (35,33c,34c) is located between an end surface of the first case (51) in the first direction (X2) and an end surface of the rear-wheel hub (41) in a second direction (X1), where the second direction (X1) is an opposite direction to the first direction (X2).

2. The drive unit (10) according to claim 1, **characterized in that** the support (46) includes a stator holding member (46A) that has the stator (31) thereon, and a coupling member (46B),
at least a part of the coupling member (46B) is located at an outer side of the rear-wheel hub (41) in a direction along the rotational center line (Ax1) of the rear-wheel hub (41), and
the first case (51) is attached to the at least a part of the coupling member (46B) with the at least one fixation tool.

3. The drive unit (10) according to claim 2, **characterized in that** the at least a part of the coupling member (46B) is larger in diameter than the stator holding member (46A).

4. The drive unit (10) according to at least one of the claims 1 to 3, **characterized in that** the electric wire coupling part (35,33c,34c) is arranged inside the first case (51).

5. The drive unit (10) according to at least one of the claims 1 to 4, **characterized in that** the first electric wire part (33) has a length which allows the first electric wire part (33) to pass through the electric wire path (46m), and reaches an outside of the rear-wheel hub (41).

6. The drive unit (10) according to at least one of the claims 1 to 5, **characterized in that** the second electric wire part (34) has a length that allows the second electric wire part (34) to exceed an end surface closer to the support (46) of the first case (51).

7. The drive unit (10) according to at least one of the claims 1 to 6, **characterized in that** the electric wire coupling part is a terminal block (35) that has an end portion of the first electric wire part (33) attached thereon, and
at least a part of the electric wire coupling part is located in the second direction of a side surface of the support (46), where the side surface of the support (46) is a surface toward the first case (51).

8. The drive unit (10) according to at least one of the claims 1 to 7, **characterized in that** the first case (51) has a first housing chamber (S1) which houses the engaging part between the power transmission mechanism and the transmission shaft (21), and a second housing chamber (S2) partitioned from the first housing chamber (S1), and the electric wire structure passes through the second housing chamber (S2).

9. The drive unit (10) according to claim 8, **characterized in that** at least a part of the second housing chamber (S2) is located at an outer side in a radial direction of the transmission shaft (21) with respect to the first housing chamber (S1).

10. The drive unit (10) according to claim 8 or 9, **characterized in that** at least a part of the second housing chamber (S2) surrounds the transmission shaft (21).

11. The drive unit (10) according to at least one of the claims 1 to 10, **characterized in that** the rear arm (50) has a second case (53) which is located at a front side of the first case (51), and houses the power transmission mechanism, and
the second case (53) has, within the second case (53), a first arm chamber (53s1) which houses the power transmission mechanism, and a second arm chamber (53s2) which houses the second electric wire part (34).

12. The drive unit (10) according to at least one of the claims 1 to 11, **characterized in that** the first case (51) supports a first end portion of the transmission shaft (21) via a first bearing (47A),
the support (46) supports a second end portion of the transmission shaft (21) via a second bearing (47B), and
one of the first case (51) and the support (46) has a third bearing (47C) which is located between the first bearing (47A) and the second bearing (47B), and supports the transmission shaft (21).

13. The drive unit (10) according to at least one of the claims 1 to 12, **characterized in that** the at least one fixation tool is arranged outside the first case (51).

14. The drive unit (10) according to at least one of the claims 1 to 13, **characterized by** a plurality of fixation tools each of which is the at least one fixation tool, the plurality of fixation tools being arranged outside the first case (51) and in a circumferential direction surrounding the transmission shaft (21).

15. A bicycle comprising:
the drive unit (10) according to at least one of the claims 1 to 14.

## Patentansprüche

1. Eine Antriebseinheit (10) für ein Fahrrad, die umfasst:
eine Hinterradnabe (41), die an einem Hinterrad (40) vorgesehen ist;
ein erstes Leistungssystem, das einen Elektromotor (30) enthält, der einen Stator (31) und einem Rotor (32) enthält, und in der Hinterradnabe (41) untergebracht ist und konfiguriert ist, um Leistung des Elektromotors (30) auf die Hinterradnabe (41) zu übertragen;
einen hinteren Arm (50), der in einer ersten Richtung (X2) als eine von einer rechten Seite und einer linken Seite in Bezug auf das Hinterrad (40) angeordnet ist;
ein zweites Leistungssystem, das eine Kurbelwelle (61) mit Pedalen (63), eine Übertragungswelle (21), die entlang einer Rotationsmittellinie (Ax1) der Hinterradnabe (41) angeordnet ist, und einen Kraftübertragungsmechanismus, der mit der Kurbelwelle (61) und der Übertragungswelle (21) in Eingriff steht, um die Kraft von der Kurbelwelle (61) auf die Übertragungswelle (21) zu übertragen, enthält, und konfiguriert ist, um die Leistung über die Übertragungswelle (21) auf die Hinterradnabe (41) zu übertragen; und
eine Elektro-Kabelstruktur, die sich von dem Elektromotor (30) erstreckt und sich entlang des hinteren Arms (50) erstreckt, wobei
eine Lagerung (46) an der Hinterradnabe (41) vorgesehen ist, die Lagerung (46) die Hinterradnabe (41) lagert, so dass sich die Hinterradnabe (41) drehen kann,
der hintere Arm (50) ein erstes Gehäuse (51) hat, das einen Eingriffsteil zwischen dem Kraftübertragungsmechanismus und der Übertragungswelle (21) aufnimmt,
das erste Gehäuse (51) mit zumindest einem Befestigungswerkzeug an der Lagerung (46) befestigt ist,
die Elektro-Kabelstruktur sich in Richtung einer Innenseite der Hinterradnabe (41) erstreckt und durch einen Elektro-Kabelpfad (46m) verläuft, der in der Lagerung (46) ausgebildet ist, **dadurch gekennzeichnet, dass**
die Elektro-Kabelstruktur einen ersten Elektro-Kabelteil (33), der sich von dem Elektromotor (30) erstreckt, einen zweiten Elektro-Kabelteil (34), der sich entlang des hinteren Arms (50) erstreckt, und einen Elektro-Kabelkopplungsteil (35, 33c, 34c), der den ersten Elektro-Kabelteil (33) und den zweiten Elektro-Kabelteil (34) elektrisch miteinander koppelt, enthält, wobei
die Elektro-Kabelstruktur sich von dem ersten Gehäuse (51) in Richtung der Innenseite der Hinterradnabe (41) erstreckt und durch den Elektro-Kabelpfad (46m), der in der Lagerung (46) ausgebildet istz, verläuft, und
der Elektro-Kabelkopplungsteil (35, 33c, 34c) zwischen einer Endfläche des ersten Gehäuses (51) in der ersten Richtung (X2) und einer Endfläche der Hinterradnabe (41) in einer zweiten Richtung (X1) angeordnet ist, wobei die zweite Richtung (X1) eine entgegengesetzte Richtung zu der ersten Richtung (X2) ist.

2. Die Antriebseinheit (10) gemäß Anspruch 1, **dadurch gekennzeichnet, dass** die Lagerung (46) ein Statorhalteelement (46A), auf dem sich der Stator (31) befindet, und ein Kopplungselement (46B) enthält,
zumindest ein Teil des Kopplungselements (46B) an einer Außenseite der Hinterradnabe (41) in einer Richtung entlang der Rotationsmittellinie (Ax1) der Hinterradnabe (41) angeordnet ist, und
das erste Gehäuse (51) mit dem zumindest einen Befestigungswerkzeug an dem zumindest einen Teil des Kopplungselements (46B) befestigt ist.

3. Die Antriebseinheit (10) gemäß Anspruch 2, **dadurch gekennzeichnet, dass** zumindest ein Teil des Kopplungselements (46B) einen größeren Durchmesser aufweist als das Statorhalteelement (46A).

4. Die Antriebseinheit (10) gemäß zumindest einem der Ansprüche 1 bis 3, **dadurch gekennzeichnet, dass** das Elektro-Kabelkopplungsteil (35, 33c, 34c) innerhalb des ersten Gehäuses (51) angeordnet ist.

5. Die Antriebseinheit (10) gemäß zumindest einem der Ansprüche 1 bis 4, **dadurch gekennzeichnet, dass** der erste Elektro-Kabelteil (33) eine Länge aufweist, die es dem ersten Elektro-Kabelteil (33) erlaubt, durch den Elektro-Kabelpfad (46m) zu verlaufen, und eine Außenseite der Hinterradnabe (41) erreicht.

6. Die Antriebseinheit (10) gemäß zumindest einem der Ansprüche 1 bis 5, **dadurch gekennzeichnet, dass** der zweite Elektro-Kabelteil (34) eine Länge aufweist, die es dem zweiten Elektro-Kabelteil (34) erlaubt, über eine Endfläche hinauszugehen, die näher an der Lagerung (46) des ersten Gehäuses (51) liegt.

7. Die Antriebseinheit (10) gemäß zumindest einem der Ansprüche 1 bis 6, **dadurch gekennzeichnet, dass** das Elektro-Kabelkopplungsteil ein Anschlussblock (35) ist, der einen Endabschnitt des ersten Elektro-Kabelteils (33) daran angebracht hat, und zumindest ein Teil des Elektro-Kabelkopplungsteils in der zweiten Richtung einer Seitenfläche der Lagerung (46) angeordnet ist, wobei die Seitenfläche der Lagerung (46) eine Fläche in Richtung des ersten Gehäuses (51) ist.

8. Die Antriebseinheit (10) gemäß zumindest einem der Ansprüche 1 bis 7, **dadurch gekennzeichnet, dass** das erste Gehäuse (51) eine erste Gehäusekammer (S1), die den Eingriffsteil zwischen dem Kraftübertragungsmechanismus und der Übertragungswelle (21) aufnimmt, und eine zweite Gehäusekammer (S2), die von der ersten Gehäusekammer (S1) getrennt ist, hat, und
die Elektro-Kabelstruktur durch die zweite Gehäusekammer (S2) verläuft.

9. Die Antriebseinheit (10) gemäß Anspruch 8, **dadurch gekennzeichnet, dass** zumindest ein Teil der zweiten Gehäusekammer (S2) an einer Außenseite in einer radialen Richtung der Übertragungswelle (21) in Bezug auf die erste Gehäusekammer (S1) angeordnet ist.

10. Die Antriebseinheit (10) gemäß Anspruch 8 oder 9, **dadurch gekennzeichnet, dass** zumindest ein Teil der zweiten Gehäusekammer (S2) die Übertragungswelle (21) umgibt.

11. Die Antriebseinheit (10) gemäß zumindest einem der Ansprüche 1 bis 10, **dadurch gekennzeichnet, dass** der hintere Arm (50) ein zweites Gehäuse (53) hat, das an einer Vorderseite des ersten Gehäuses (51) angeordnet ist und den Kraftübertragungsmechanismus aufnimmt, und
das zweite Gehäuse (53) innerhalb des zweiten Gehäuses (53) eine erste Armkammer (53s1), in welcher der Kraftübertragungsmechanismus untergebracht ist, und eine zweite Armkammer (53s2), in der das zweite Elektro-Kabelteil (34) untergebracht ist, hat.

12. Die Antriebseinheit (10) gemäß zumindest einem der Ansprüche 1 bis 11, **dadurch gekennzeichnet, dass** das erste Gehäuse (51) einen ersten Endabschnitt der Übertragungswelle (21) über ein erstes Lager (47A) lagert,
die Lagerung (46) einen zweiten Endabschnitt der Übertragungswelle (21) über ein zweites Lager (47B) lagert, und
eines von dem ersten Gehäuse (51) und der Lagerung (46) ein drittes Lager (47C) hat, das zwischen dem ersten Lager (47A) und dem zweiten Lager (47B) angeordnet ist und die Übertragungswelle (21) lagert.

13. Die Antriebseinheit (10) gemäß zumindest einem der Ansprüche 1 bis 12, **dadurch gekennzeichnet, dass** das zumindest eine Befestigungswerkzeug außerhalb des ersten Gehäuses (51) angeordnet ist.

14. Die Antriebseinheit (10) gemäß zumindest einem der Ansprüche 1 bis 13, **gekennzeichnet durch**
eine Mehrzahl von Befestigungswerkzeugen, von denen jedes das zumindest eine Befestigungswerkzeug ist, wobei die Mehrzahl von Befestigungswerkzeugen außerhalb des ersten Gehäuses (51) und in einer Umfangsrichtung, welche die Übertragungswelle (21) umgibt, angeordnet ist.

15. Ein Fahrrad, das umfasst:
die Antriebseinheit (10) gemäß zumindest einem der Ansprüche 1 bis 14.

## Revendications

1. Une unité d'entraînement (10) pour une bicyclette comprenant :
un moyeu de roue arrière (41) fourni à une roue arrière (40) ;
un premier système de puissance qui inclut un moteur électrique (30) incluant un stator (31) et un rotor (32), et abrité dans le moyeu de roue arrière (41), et est configuré pour transmettre une puissance du moteur électrique (30) au moyeu de roue arrière (41) ;
un bras arrière (50) disposé dans une première direction (X2) en tant qu'un d'un côté droit et d'un côté gauche par rapport à la roue arrière (40) ;
un deuxième système de puissance qui inclut un axe de pédalier (61) avec des pédales (63), un arbre de transmission (21) disposé le long d'une ligne centrale de rotation (Ax1) du moyeu de roue arrière (41), et un mécanisme de transmission de puissance solidarisé avec l'axe de pédalier (61) et l'arbre de transmission (21) pour transmettre la puissance de l'axe de pédalier (21) à l'arbre de transmission (21), et est configuré pour transmettre la puissance au moyeu de roue arrière (41) par le truchement de l'arbre de transmission (21) ; et
une structure de câblage électrique s'étendant depuis le moteur électrique (30) et s'étendant le long du bras arrière (50), dans laquelle
un support (46) est fourni au moyeu de roue arrière (41), le support (46) supportant le moyeu de roue arrière (41) de sorte à permettre au moyeu de roue arrière (41) de tourner,
le bras arrière (50) présente un premier boîtier (51) abritant une partie de solidarisation entre le mécanisme de transmission de puissance et l'arbre de transmission (21),
le premier boîtier (51) est rattaché au support (46) avec au moins un outil de fixation,
la structure de câblage électrique s'étend vers un intérieur du moyeu de roue arrière (41) en passant à travers un chemin de câblage électrique (46m) formé dans le support (46), **caractérisée en ce que**
la structure de câblage électrique inclut une première partie de câblage électrique (33) s'étendant depuis le moteur électrique (30), une deuxième partie de câblage électrique (34) s'étendant le long du bras arrière (50), et une partie de couplage de câblage électrique (35, 33c, 34c) couplant électriquement la première partie de câblage électrique (33) et la deuxième partie de câblage électrique (34) l'une à l'autre, dans laquelle
la structure de câblage électrique s'étend depuis le premier boîtier (51) vers l'intérieur du moyeu de roue arrière (41) en passant à travers le chemin de câblage électrique (46m) formé dans le support (46), et
la partie de couplage de câblage électrique (35, 33c, 34c) est située entre une surface d'extrémité du premier boîtier (51) dans la première direction (X2) et une surface d'extrémité du moyeu de roue arrière (41) dans une deuxième direction (X1), où la deuxième direction (X1) est une direction opposée à la première direction (X2) .

2. L'unité d'entraînement (10) selon la revendication 1, **caractérisée en ce que** le support (46) inclut un élément de maintien de stator (46A) sur lequel le stator (31) est disposé, et un élément de couplage (46B),
au moins une partie de l'élément de couplage (46B) est située sur un côté extérieur du moyeu de roue arrière (41) dans une direction le long de la ligne centrale de rotation (Ax1) du moyeu de roue arrière (41), et
le premier boîtier (51) est rattaché à l'au moins une partie de l'élément de couplage (46B) avec l'au moins un outil de fixation.

3. L'unité d'entraînement (10) selon la revendication 2, **caractérisée en ce que** l'au moins une partie de l'élément de couplage (46B) est plus grande en diamètre que l'élément de maintien de stator (46A).

4. L'unité d'entraînement (10) selon au moins une des revendications 1 à 3, **caractérisée en ce que** la partie de couplage de câblage électrique (35, 33c, 34c) est disposée à l'intérieur du premier boîtier (51).

5. L'unité d'entraînement (10) selon au moins une des revendications 1 à 4, **caractérisée en ce que** la première partie de câblage électrique (33) présente une longueur qui permet à la première partie de câblage électrique (33) de traverser le chemin de câblage électrique (46m), et atteint un extérieur du moyeu de roue arrière (41).

6. L'unité d'entraînement (10) selon au moins une des revendications 1 à 5, **caractérisée en ce que** la deuxième partie de câblage électrique (34) présente une longueur qui permet à la deuxième partie de câblage électrique (34) de dépasser une surface d'extrémité plus proche du support (46) du premier boîtier (51).

7. L'unité d'entraînement (10) selon au moins une des revendications 1 à 6, **caractérisée en ce que** la partie de couplage de câblage électrique est un bloc de borne (35) qui présente une partie d'extrémité de la première partie de câblage électrique (33) rattachée à celui-ci, et
au moins une partie de la partie de couplage de câblage électrique est située dans la deuxième direction d'une surface latérale du support (46), où la surface latérale du support (46) est une surface vers le premier boîtier (51) .

8. L'unité d'entraînement (10) selon au moins une des revendications 1 à 7, **caractérisée en ce que** le premier boîtier (51) présente une première chambre de logement (51) qui abrite la partie de solidarisation entre le mécanisme de transmission de puissance et l'arbre de transmission (21), et une deuxième chambre de logement (S2) partitionnée à partir de la première chambre de logement (S1), et la structure de câblage électrique traverse la deuxième chambre de logement (S2).

9. L'unité d'entraînement (10) selon la revendication 8, **caractérisée en ce que** au moins une partie de la deuxième chambre de logement (S2) est située sur un côté extérieur dans une direction radiale de l'arbre de transmission (21) par rapport à la première chambre de logement (S1).

10. L'unité d'entraînement (10) selon la revendication 8 ou 9, **caractérisée en ce que** au moins une partie de la deuxième chambre de logement (S2) entoure l'arbre de transmission (21).

11. L'unité d'entraînement (10) selon au moins une des revendications 1 à 10, **caractérisée en ce que** le bras arrière (50) présente un deuxième boîtier (53) qui est situé sur un côté avant du premier boîtier (51), et abrite le mécanisme de transmission de puissance, et
le deuxième boîtier (53) présente, au sein du deuxième boîtier (53), une première chambre de bras (53s1) qui abrite le mécanisme de transmission de puissance, et une deuxième chambre de bras (53s2) qui abrite la deuxième partie de câblage électrique (34).

12. L'unité d'entraînement (10) selon au moins une des revendications 1 à 11, **caractérisée en ce que** le premier boîtier (51) supporte une première partie d'extrémité de l'arbre de transmission (21) via un premier palier (47A),
le support (46) supporte une deuxième partie d'extrémité de l'arbre de transmission (21) via un deuxième palier (47B), et
un du premier boîtier (51) et du support (46) présente un troisième roulement (47C) qui est situé entre le premier palier (47A) et le deuxième palier (47B), et supporte l'arbre de transmission (21).

13. L'unité d'entraînement (10) selon au moins une des revendications 1 à 12, **caractérisée en ce que** l'au moins un outil de fixation est disposé hors du premier boîtier (51) .

14. L'unité d'entraînement (10) selon au moins une des revendications 1 à 13, **caractérisée par** une pluralité d'outils de fixation dont chacun est l'au moins un outil de fixation, la pluralité d'outils de fixation étant disposée hors du premier boîtier (51) dans une direction circonférentielle entourant l'arbre de transmission (21) .

15. Bicyclette comprenant :
l'unité d'entraînement (10) selon au moins une des revendications 1 à 14.
